# EUROPEAN PATENT APPLICATION

(11) **EP 4 322 254 A1**
(43) Date of publication of application: **14.02.2024**
(21) Application number: 22932480.1
(22) Date of filing: 17.06.2022
(51) Int. Cl.: H01M 4/36, H01M 4/62, H01M 10/0525

(54) **POSITIVE ELECTRODE ACTIVE MATERIAL HAVING CORE-SHELL STRUCTURE AND PREPARATION METHOD THEREFOR, POSITIVE ELECTRODE PLATE, SECONDARY BATTERY, BATTERY MODULE, BATTERY PACK, AND ELECTRIC DEVICE**

(71) Applicant: Contemporary Amperex Technology Co., Limited, Ningde City, Fujian 352100 (CN)
(72) Inventor: JIANG, Yao, Ningde City, Fujian 352100 (CN); OUYANG, Chuying, Ningde City, Fujian 352100 (CN); ZHANG, Xinxin, Ningde City, Fujian 352100 (CN); DENG, Bin, Ningde City, Fujian 352100 (CN); XU, Bo, Ningde City, Fujian 352100 (CN); WANG, Zhiqiang, Ningde City, Fujian 352100 (CN); YUAN, Tianci, Ningde City, Fujian 352100 (CN); CHEN, Shangdong, Ningde City, Fujian 352100 (CN)
(74) Representative: Gong, Jinping
(86) International application number: PCT/CN2022/099523
(87) International publication number: WO 2023/240617

(57) **Abstract**

This application provides a positive electrode active material with a core-shell structure, a preparation method of positive electrode active material, a positive electrode plate, a secondary battery, a battery module, a battery pack, and an electric apparatus. The positive electrode active material includes a core containing LiₘAₓMn_{1-y}B_{y}P_{1-z}C_{z}O₄₋ₙDₙ, a first coating layer covering the core and containing a crystalline pyrophosphate MₐP₂O₇ and an oxide M'_{b}O_{c}, and a second coating layer covering the first coating layer. The positive electrode active material in this application can reduce the generation of Li/Mn antisite defects, reduce the dissolution of manganese, and decrease the lattice change rate, increasing the capacity of the secondary battery and improving the cycling performance, high-temperature storage performance, and safety performance of the secondary battery.

## Description

### TECHNICAL FIELD

This application relates to the field of secondary battery technologies, and in particular, to a positive electrode active material with a core-shell structure, a preparation method of such positive electrode active material, a positive electrode plate, a secondary battery, a battery module, a battery pack, and an electric apparatus.

### BACKGROUND

In recent years, secondary batteries are in increasingly wide use. Secondary batteries have been widely used in energy storage power supply systems such as hydroelectric power plants, thermal power plants, wind power plants, and solar power plants, and many other fields including electric tools, electric bicycles, electric motorcycles, electric vehicles, military equipment, and aerospace. Due to great development of secondary batteries, higher requirements are imposed on energy density, cycling performance, safety performance, and the like of secondary batteries. Lithium manganese phosphate, as an existing positive electrode active material for secondary batteries, is prone to Li/Mn antisite defects and severe dissolution of manganese during charge and discharge, which affects the gram capacity of secondary batteries and leads to poor safety performance and cycling performance of secondary batteries.

### SUMMARY

This application is carried out in view of the preceding issues with a purpose to provide a positive electrode active material with a core-shell structure, a preparation method of positive electrode active material, a positive electrode plate, a secondary battery, a battery module, a battery pack, and an electric apparatus, so as to solve the Li/Mn anti-site defects and serious manganese dissolution easily produced in the existing lithium manganese phosphate positive electrode active material during charge and discharge, thereby solving the problems of low capacity and poor safety performance and cycling performance of the secondary battery.

To achieve the foregoing purpose, a first aspect of this application provides a positive electrode active material with a core-shell structure, including a core and a shell enveloping the core, where
the core includes LiₘAₓMn_{1-y}B_{y}P_{1-z}C_{z}O₄₋ₙDₙ, where m is any value selected in the range from 0.5 to 1.2, optionally any value selected in the range from 0.9 to 1.1; x is any value selected in the range from 0.001 to 0.5, optionally any value selected in the range from 0.001 to 0.1; y is any value selected in the range from 0.001 to 0.5; z is any value selected in the range from 0.001 to 0.2, optionally any value selected in the range from 0.001 to 0.1; n is any value selected in the range from 0.001 to 0.5, optionally any value selected in the range from 0.001 to 0.1; A is one or more elements selected from of Zn, Al, Na, K, Mg, Nb, Mo, and W, optionally one or more elements selected from Al, Mg, Nb, Mo, and W; B is one or more elements selected from Ti, V, Zr, Fe, Ni, Mg, Co, Ga, Sn, Sb, Nb, and Ge, optionally one or more elements selected from Ti, V, Fe, Ni, Mg, and Co; C is one or more elements selected from B, S, Si, and N, optionally one or more elements selected from S, Si, and N; and D is one or more elements selected from S, F, Cl, and Br, optionally one or more elements selected from F, Cl, and Br; and
the shell includes a first coating layer covering the core and a second coating layer covering the first coating layer;
where the first coating layer includes a crystalline pyrophosphate MₐP₂O₇ and an oxide M'_{b}O_{c}, where a is greater than 0 and less than or equal to 4, optionally greater than 0 and less than or equal to 3; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li and Fe; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, more optionally one or more elements selected from Mg, Al, V, Cu, Zn, Zr, and W; and
the second coating layer includes carbon.

The inventors of this application have found in actual operation that: the lithium manganese phosphate positive electrode active material is prone to Li/Mn antisite defects and severe dissolution of manganese during deep charge and discharge. The manganese dissolved is reduced to metal manganese after migrating to a negative electrode. The metal manganese produced is equivalent to a "catalyst" and can catalyze decomposition of SEI film (solid electrolyte interphase, solid electrolyte interphase film) on surface of the negative electrode. A part of the by-products produced is gases that can easily cause battery swelling, affecting the safety performance of the secondary battery, and another part of the by-products is deposited on surface of the negative electrode, hindering the passage of lithium ions in and out of the negative electrode, causing an increase in the impedance of the secondary battery and affecting the kinetic performance and cycling performance of the battery. In addition, to supplement the lost SEI film, active lithium inside the electrolyte and the battery is continuously consumed, which has irreversible effects on the capacity retention rate of the secondary battery.

Thus, the applicant has surprisingly found that: with a positive electrode active material obtained by doping a specific amount of a specific element at Li, Mn, P, and 0 sites of the compound LiMnP04, coating surface of the compound with a first coating layer containing the crystalline pyrophosphate and the oxide, and coating surface of the first coating layer with a second coating layer containing carbon, the generation of Li/Mn antisite defects can be significantly reduced, the dissolution of manganese is reduced, and the lattice change rate is decreased, thereby increasing the capacity of the secondary battery and improving the cycling performance, high-temperature storage performance and safety performance of the secondary battery.

Unless otherwise specified, in the chemical formula LiₘAₓMn_{1-y}B_{y}P_{1-z}C_{z}O₄₋ₙDₙ, when A is more than two elements, the foregoing limitation on the value range of y is not only a limitation on the stoichiometric number of each element as Abut also a limitation on the sum of the stoichiometric numbers of all elements as A. For example, when A is two or more elements Al, A2, ..., An, the stoichiometric numbers x1, x2, ..., xn of each of Al, A2, ..., An must fall within the value range defined by this application for x, and the sum of x1, x2, ..., xn must also fall within the value range. Similarly, under the condition that B, C, and D are two or more elements, the limitation on the value ranges of the stoichiometric numbers of B, C, and D in this application also have the foregoing meaning.

Unless otherwise specified, in the chemical formula MₐP₂O₇, when M is two or more elements, the foregoing limitation on the value range of a is not only a limitation on the stoichiometric number of each element as M but also a limitation on the sum of the stoichiometric numbers of all elements as M. For example, when M is two or more elements: Ml, M2, ..., Mn, the stoichiometric numbers al, a2, ..., an of all of Ml, M2, ..., Mn must fall within the value range defined by this application for a, and the sum of al, a2, ..., an must also fall within the value range. Similarly, under the condition that M' is two or more elements in the chemical formula M'_{b}O_{c}, the limitation on the value range of the stoichiometric number of M' in this application also has the foregoing meaning.

In any embodiment of the first aspect, the pyrophosphate in the first coating layer has an interplanar spacing of 0.293-0.326 nm and an included angle of 26.41°-32.57° for a (111) crystal orientation;
optionally, the interplanar spacing of the pyrophosphate in the first coating layer is 0.300-0.310 nm; and/or
optionally, the included angle of the (111) crystal orientation of the pyrophosphate in the first coating layer is 29.00°-30.00°.

With the interplanar spacing and the included angle of the (111) crystal orientation of the pyrophosphate in the first coating layer within the foregoing ranges, the impurity phase in the coating layer can be effectively avoided, thereby increasing the gram capacity of the material and improving the cycling performance and rate performance of the secondary battery.

In any embodiment of the first aspect, x is any value in the range from 0.001 to 0.005; and/or,
y is any value in the range from 0.01 to 0.5, optionally any value in the range from 0.25 to 0.5; and/or,
z is any value in the range from 0.001 to 0.005; and/or,
n is any value in the range from 0.001 to 0.005.

Thus, with x, y, z, and n within the foregoing ranges, the generation of Li/Mn antisite defects can be further reduced, the dissolution of manganese is reduced, and the lattice change rate is decreased, thereby further increasing the capacity of the secondary battery and improving the cycling performance, high-temperature storage performance, and safety performance of the secondary battery.

In any embodiment of the first aspect, a ratio of 1-y to y in the core is 1 to 4, optionally 1.5 to 3. Herein, y represents the sum of the stoichiometric numbers of doping elements at the Mn site. The energy density and cycling performance of the secondary battery prepared by using the positive electrode active material can be further improved when the foregoing conditions are satisfied.

In any embodiment of the first aspect, a ratio of m to x in the core is 1 to 1200, optionally 9 to 1100, and more optionally 190 to 998. Herein, x represents the sum of the stoichiometric numbers of doping elements at the Li site. The energy density and cycling performance of the secondary battery prepared by using the positive electrode active material can be further improved when the foregoing conditions are satisfied.

In any embodiment of the first aspect, a coating amount of the first coating layer is greater than 0% by weight and less than or equal to 7% by weight, optionally 4-5.6% by weight based on a weight of the core.

With the coating amount of the first coating layer within the foregoing ranges, the dissolution of manganese can be further inhibited and lithium ion transport can be further promoted, thereby maintaining low impedance in the secondary battery and improving the kinetic performance of the secondary battery.

In any embodiment of the first aspect, a weight ratio of the pyrophosphate to the oxide in the first coating layer is 1:3 to 3:1, optionally 1:3 to 1:1.

An appropriate ratio of the pyrophosphate to the oxide is conducive to fully utilizing the synergistic effect of the two, which can further inhibit the dissolution of manganese while maintaining low impedance in the secondary battery.

In any embodiment of the first aspect, a crystallinity of the pyrophosphate in the first coating layer is 10% to 100%, optionally 50% to 100%.

In the first coating layer of the lithium manganese phosphate positive electrode active material in this application, the pyrophosphate having a specific crystallinity is conducive to maintaining the structural stability of the first coating layer and reducing lattice defects. This is conducive to fully utilizing the effect of the pyrophosphate on hindering the dissolution of manganese and also conducive to reducing the amount of lithium impurities contained on the surface and decreasing the valence state of surface oxygen, thereby reducing interface side reactions between the positive electrode material and the electrolyte, reducing the consumption of electrolyte, and improving the cycling performance and safety performance of the secondary battery.

In any embodiment of the first aspect, a coating amount of the second coating layer is greater than 0% by weight and less than or equal to 6% by weight, optionally 3-5% by weight based on the weight of the core.

The carbon-containing layer as the second coating layer can play a "barrier" function to avoid direct contact between the positive electrode active material and the electrolyte, thereby reducing the corrosion of the active material by the electrolyte and improving the safety performance of the battery at high temperatures. In addition, the carbon-containing layer has high electrical conductivity, which can reduce the internal resistance of the battery, thereby improving the kinetic performance of the secondary battery. With the coating amount of the second coating layer within the foregoing ranges, the kinetic performance and safety performance of the secondary battery can be further improved while a high gram capacity of the positive electrode active material is maintained.

In any embodiment of the first aspect, in the positive electrode active material, A is any element selected from Zn, Al, Na, K, Mg, Nb, Mo, and W, and optionally, A is Mg or Nb; and/or
B is at least two elements selected from Ti, V, Zr, Fe, Ni, Mg, Co, Ga, Sn, Sb, Nb, and Ge, optionally, B is at least two elements selected from Fe, Ti, V, Co, and Mg, and more optionally, B is a combination of element Fe and at least one element selected from Ti, V, Co, and Mg; and/or
C is any element selected from B, S, Si, and N, and optionally, C is S; and/or
D is any element selected from S, F, Cl, and Br, and optionally, D is F.

Selection of the doping elements from the foregoing range is conducive to enhancing the doping effect to further reduce the lattice change rate, thereby inhibiting the dissolution of manganese and reducing the consumption of the electrolyte and active lithium, and is also conducive to further reducing the surface oxygen activity and reducing interface side reactions between the positive electrode active material and the electrolyte, thereby improving the cycling performance and high-temperature storage performance of the battery.

In any embodiment of the first aspect, the positive electrode active material has a Li/Mn antisite defect concentration of 4% or less, optionally 2% or less. In the positive electrode active material in this application, the Li/Mn antisite defect refers to site exchange of Li⁺ and Mn²⁺ in LiMnP04 lattice. Because the Li⁺ transport channel is a one-dimensional channel and Mn²⁺ has difficulty in migrating in the Li⁺ transport channel, Mn²⁺ of the antisite defect hinders the Li⁺ transport. With Li/Mn antisite defect concentration controlled at a low level, the gram capacity of the positive electrode active material and the rate performance of the secondary battery can be improved.

In any embodiment of the first aspect, the lattice change rate of the positive electrode active material before and after complete lithium deintercalation and intercalation is 9.8% or less, optionally 6% or less, and more optionally 4% or less. The processes of lithium deintercalation and intercalation of LiMnP04 are two-phase reactions. The interface stress between two phases is determined by the magnitude of the lattice change rate, and a smaller lattice change rate indicates a lower interface stress, making Li⁺ transport easier. Therefore, a decrease in the lattice change rate of the core will be conducive to enhancing Li⁺ transport capacity, thereby improving the rate performance of the secondary battery.

In any embodiment of the first aspect, a valence state of surface oxygen of the positive electrode active material is -1.55 or less, optionally -1.88 or less, and more optionally -1.98 to -1.88. This is due to the fact that a higher valence state of oxygen in the compound indicates a higher electron gaining capability, that is, stronger oxidation. In the positive electrode active material in this application, with the surface valence state of oxygen controlled at a lower level, the reactivity of the surface of the positive electrode material can be reduced and the interface side reactions between the positive electrode active material and the electrolyte can be reduced, thereby improving the cycling performance and high-temperature storage performance of the secondary battery.

In any embodiment of the first aspect, a compacted density of the positive electrode active material under 3 tons (T) is 1.89 g/cm³ or more, optionally 2.0 g/cm³ or more, and more optionally 2.2 g/cm³ or more. A higher compacted density of the positive electrode active material, that is, a higher weight per unit volume of the active substance, will be more conducive to improving the volumetric energy density of the secondary battery.

A second aspect of this application provides a preparation method of positive electrode active material, which includes the following steps:
a step of providing a core material: the core including LiₘAₓMn_{1-y}B_{y}P_{1-z}C_{z}O₄₋ₙDₙ, where m is any value selected in the range from 0.5 to 1.2, optionally any value selected in the range from 0.9 to 1.1; x is any value selected in the range from 0.001 to 0.5, optionally any value selected in the range from 0.001 to 0.1; y is any value selected in the range from 0.001 to 0.5; z is any value selected in the range from 0.001 to 0.2, optionally any value selected in the range from 0.001 to 0.1; n is any value selected in the range from 0.001 to 0.5, optionally any value selected in the range from 0.001 to 0.1; A is one or more elements selected from of Zn, Al, Na, K, Mg, Nb, Mo, and W, optionally one or more elements selected from Al, Mg, Nb, Mo, and W; B is one or more elements selected from Ti, V, Zr, Fe, Ni, Mg, Co, Ga, Sn, Sb, Nb, and Ge, optionally one or more elements selected from Ti, V, Fe, Ni, Mg, and Co; C is one or more elements selected from B, S, Si, and N, optionally one or more elements selected from S, Si, and N; and D is one or more elements selected from S, F, Cl, and Br, optionally one or more elements selected from F, Cl, and Br; and
a coating step: providing powder including pyrophosphate MₐP₂O₇ and a suspension including a carbon source and an oxide M'_{b}O_{c}, and mixing the core material, the powder including pyrophosphate MₐP₂O₇, and the suspension including the carbon source and the oxide M'_{b}O_{c}, followed by sintering, to obtain a positive electrode active material, where a is greater than 0 and less than or equal to 4, optionally greater than 0 and less than or equal to 3; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li and Fe; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, more optionally one or more elements selected from Mg, Al, V, Cu, Zn, Zr, and W; and
where the positive electrode active material has a core-shell structure, including a core and a shell enveloping the core, the core including LiₘAₓMn_{1-y}B_{y}P_{1-z}C_{z}O₄₋ₙDₙ and the shell including a first coating layer covering the core and a second coating layer covering the first coating layer; where the first coating layer includes a crystalline pyrophosphate MₐP₂O₇ and an oxide M'_{b}O_{c}, and the second coating layer includes carbon.

Thus, the applicant has surprisingly found that: with a positive electrode active material obtained by doping a specific amount of a specific element at Li, Mn, P, and 0 sites of the compound LiMnPO₄, coating surface of the compound with a first coating layer containing the crystalline pyrophosphate and the oxide, and coating surface of the first coating layer with a second coating layer containing carbon, the generation of Li/Mn antisite defects can be significantly reduced, the dissolution of manganese is reduced, and the lattice change rate is decreased, thereby increasing the capacity of the secondary battery and improving the cycling performance, high-temperature storage performance and safety performance of the secondary battery.

In any embodiment of the second aspect of this application, the step of providing a core material includes the following steps:
step (1): mixing a manganese source, a source of element B, an acid, and an optional solvent to obtain a mixture; and
step (2): mixing the mixture with a lithium source, a phosphorus source, a source of element A, a source of element C, a source of element D, and an optional solvent, followed by drying and sintering, to obtain a core material including LiₘAₓMn_{1-y}B_{y}P_{1-z}C_{z}O₄₋ₙDₙ.

In any embodiment of the second aspect of this application, the mixing in the step (1) is carried out at 60°C-120°C; and/or, in the step (1), the mixing is carried out by stirring at 200-800 rpm.

In any embodiment of the second aspect of this application, in the step (2), the mixing is carried out for 8-15 hours.

In any embodiment of the second aspect of this application, in the step (2), sintering is carried out at 600°C-900°C for 6-14 hours.

In any embodiment of the second aspect of this application, the source of element A is one or more selected from elementary substance, oxides, phosphates, oxalates, carbonates, and sulfates of element A; and/or,
the source of element B is one or more selected from elementary substance, oxides, phosphates, oxalates, carbonates, and sulfates of element B; and/or,
the source of element C is one or more selected from sulfates, borates, nitrates, and silicates of element C; and/or,
the source of element D is one or more selected from elementary substance and ammonium salts of element D.

In any embodiment of the second aspect of this application, the powder including pyrophosphate MₐP₂O₇ is prepared by the following steps:
mixing a source of element M, a phosphorus source, and an optional solvent to obtain a mixture, adjusting the pH of the mixture to 4-6, continuing the mixing, and then carrying out drying and sintering.

In any embodiment of the second aspect of this application, in the steps of preparing the powder including the pyrophosphate MₐP₂O₇, the drying is carried out at 100°C-300°C for 4-8 h, optionally at 150°C-200°C; and/or, the sintering is carried out at 500°C-800°C and under protection of an inert gas for 4-10 h, optionally at 650°C-800°C.

In any embodiment of the second aspect of this application, in the coating step, the sintering temperature is 500-800°C and the sintering time is 4-10 h.

A third aspect of this application provides a positive electrode plate including a positive electrode current collector and a positive electrode film layer disposed on at least one surface of the positive electrode current collector, where the positive electrode film layer includes the positive electrode active material according to the first aspect of this application or a positive electrode active material prepared by the preparation method according to the second aspect of this application, and a percentage of the positive electrode active material in the positive electrode film layer is 10% or more by weight based on a total weight of the positive electrode film layer.

In any embodiment of the third aspect of this application, the percentage of the positive electrode active material in the positive electrode film layer is 90-99.5% by weight based on the total weight of the positive electrode film layer. This ensures that the secondary battery has a high capacity and good cycling performance, high-temperature storage performance, and safety performance.

A fourth aspect of this application provides a secondary battery including the positive electrode active material according to the first aspect of this application or a positive electrode active material prepared by the preparation method according to the second aspect of this application or the positive electrode plate according to the third aspect of this application.

A fifth aspect of this application provides a battery module including the secondary battery according to the fourth aspect of this application.

A sixth aspect of this application provides a battery pack including the battery module according to the fifth aspect of this application.

A seventh aspect of this application provides an electric apparatus including at least one selected from the secondary battery according to the fourth aspect of this application, the battery module according to the fifth aspect of this application, and the battery pack according to the sixth aspect of this application.

### BRIEF DESCRIPTION OF DRAWINGS

FIG. 1 is a schematic diagram of a positive electrode active material with a core-shell structure according to an embodiment of this application.
FIG. 2 is a schematic diagram of a secondary battery according to an embodiment of this application.
FIG. 3 is an exploded view of the secondary battery according to the embodiment of this application in FIG. 2.
FIG. 4 is a schematic diagram of a battery module according to an embodiment of this application.
FIG. 5 is a schematic diagram of a battery pack according to an embodiment of this application.
FIG. 6 is an exploded view of the battery pack according to the embodiment of this application in FIG. 5.
FIG. 7 is a schematic diagram of an electric apparatus using a secondary battery as a power source according to an embodiment of this application.

Reference signs in the accompanying drawings are described as follows:
1. battery pack; 2. upper box body; 3. lower box body; 4. battery module; 5. secondary battery; 51. housing; 52. electrode assembly; 53. top cover assembly; 11. core; 12. first coating layer; and 13. second coating layer.

### DESCRIPTION OF EMBODIMENTS

The following specifically discloses embodiments of a positive electrode active material, and a preparation method of positive electrode active material, a positive electrode plate, a secondary battery, a battery module, a battery pack, and an electric apparatus in this application with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

A range "less/lower than a value" or "greater/higher than a value" in this application indicate a range limited by the value as an upper or lower limit.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the method may further include step (c), indicating that step (c) may be added to the method in any order. For example, the method may include steps (a), (b), and (c), or steps (a), (c), and (b), or steps (c), (a), and (b), or the like.

Unless otherwise specified, "include" and "contain" mentioned in this application are inclusive or may be exclusive. For example, terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B" : A is true (or present) and B is false (or not present); A is false (or not present) and B is true (or present); or both A and B are true (or present).

Unless otherwise specified, in this application, the median particle size Dᵥ50 refers to a particle size at which the cumulative volume distribution percentage of the positive electrode active material reaches 50%. In this application, the median particle size Dᵥ50 of the positive electrode active material may be determined in a laser diffraction particle size analyzing method. For example, according to the standard GB/T 19077-2016, a laser particle size analyzer (for example, Malvern Master Size 3000) is used.

Unless otherwise specified, in this application, the term "coating layer" refers to a substance layer covering on the core. The core may be completely or partially coated with the substance layer, and use of the "coating layer" is merely for ease of description and is not intended to limit the present invention. Similarly, the term "thickness of the coating layer" refers to a thickness of the substance layer covering on the core in a radial direction of the core.

Unless otherwise specified, in this application, the term "source" refers to a compound that is a source of an element. For example, types of "source" include but are not limited to carbonates, sulfates, nitrates, elementary substances, halides, oxides, and hydroxides.

### [Secondary battery]

Secondary batteries, also referred to as rechargeable batteries or storage batteries, are batteries whose active material can be activated for continuous use through charging after the batteries are discharged.

Generally, a secondary battery includes a positive electrode plate, a negative electrode plate, a separator, and an electrolyte. During charging and discharging of the battery, active ions (for example, lithium ions) are intercalated and deintercalated back and forth between the positive electrode plate and the negative electrode plate. The separator is sandwiched between the positive electrode plate and the negative electrode plate to mainly prevent short circuit between the positive and negative electrodes and allow active ions to pass through. The electrolyte is between the positive electrode plate and the negative electrode plate, playing a role of conducting active ions.

### [Positive electrode active material]

This application provides a positive electrode active material with a core-shell structure, including a core and a shell enveloping the core, where
the core includes LiₘAₓMn_{1-y}B_{y}P_{1-z}C_{z}O₄₋ₙDₙ, where m is any value selected in the range from 0.5 to 1.2, optionally any value selected in the range from 0.9 to 1.1; x is any value selected in the range from 0.001 to 0.5, optionally any value selected in the range from 0.001 to 0.1; y is any value selected in the range from 0.001 to 0.5; z is any value selected in the range from 0.001 to 0.2, optionally any value selected in the range from 0.001 to 0.1; n is any value selected in the range from 0.001 to 0.5, optionally any value selected in the range from 0.001 to 0.1; A is one or more elements selected from of Zn, Al, Na, K, Mg, Nb, Mo, and W, optionally one or more elements selected from Al, Mg, Nb, Mo, and W; B is one or more elements selected from Ti, V, Zr, Fe, Ni, Mg, Co, Ga, Sn, Sb, Nb, and Ge, optionally one or more elements selected from Ti, V, Fe, Ni, Mg, and Co; C is one or more elements selected from B, S, Si, and N, optionally one or more elements selected from S, Si, and N; and D is one or more elements selected from S, F, Cl, and Br, optionally one or more elements selected from F, Cl, and Br; and
the shell includes a first coating layer covering the core and a second coating layer covering the first coating layer;
where the first coating layer includes a crystalline pyrophosphate MₐP₂O₇ and an oxide M'_{b}O_{c}, where a is greater than 0 and less than or equal to 4, optionally greater than 0 and less than or equal to 3; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li and Fe; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, more optionally one or more elements selected from Mg, Al, V, Cu, Zn, Zr, and W; and
the second coating layer includes carbon.

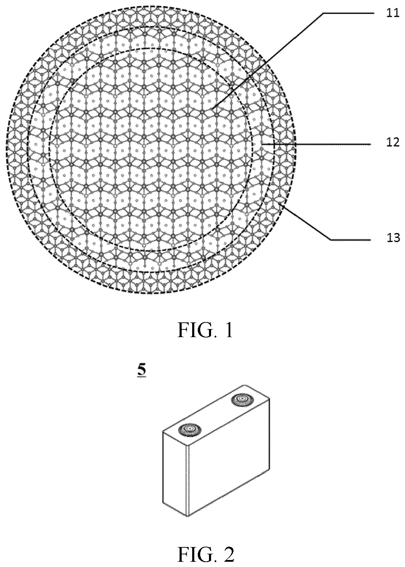

As shown in FIG. 1, the positive electrode active material with a core-shell structure in this application includes a core 11, a first coating layer 12 covering the core 11, and a second coating layer 13 covering the first coating layer 12. The core 11 includes LiₘAₓMn_{1-y}B_{y}P_{1-z}C_{z}O₄₋ₙDₙ. In the core 11, the lattice change rate is reduced by Li and Mn site doping; Mn site doping can also effectively reduce the surface activity, thus inhibiting the dissolution of Mn and the interface side reactions between the positive electrode active material and the electrolyte; P site doping makes the rate of change of Mn-0 bond length faster and reduces the small polaron migration barrier of the material, thus favoring the electronic conductivity; O site doping has a good effect on reducing the interface side reactions; and the doping of P site and 0 site also has an effect on the dissolution of Mn caused by antisite defects and the kinetic performance. Therefore, the doping reduces the antisite defect concentration in the material, improves the kinetic performance and gram capacity of the material, and also changes the morphology of the particles, thereby increasing the compacted density. The first coating layer 12 includes a crystalline pyrophosphate and an oxide. Because the high migration barrier (> 1 eV) of transition metals in the pyrophosphate can effectively inhibit the dissolution of transition metals and the oxide has high structural stability and low surface activity, the coating with the oxide can effectively mitigate the interface side reactions, thereby improving the high-temperature cycling and high-temperature storage performance, and the like, of the battery. In addition, as a carbon-containing layer, the second coating layer 13 can effectively improve the electrical conductivity and desolvation ability of the positive electrode active material. In addition, the "barrier" function of the second coating layer 13 can further hinder the migration of manganese ions into the electrolyte and reduce the corrosion of the active material by the electrolyte. Therefore, with element doping and surface coating on lithium manganese phosphate by using the positive electrode active material in this application, it is possible to reduce the generation of Li/Mn antisite defects, effectively inhibit the dissolution of Mn during lithium deintercalation and intercalation, and promote the migration of lithium ions, thereby improving the rate performance of the cell and improving the cycling performance, high-temperature performance, and safety performance of the secondary battery. It should be noted that positions of main characteristic peaks of the positive electrode active material in this application are basically consistent with those of LiMnP04 without doping, indicating that the doped lithium manganese phosphate positive electrode active material has no impurity phase, and that the improvement of the secondary battery performance is mainly attributed to the element doping rather than impurity phases.

In some embodiments, the entire LiₘAₓMn_{1-y}B_{y}P_{1-z}C_{z}O₄₋ₙDₙ remains electrically neutral.

Unless otherwise specified, in the chemical formula LiₘAₓMn_{1-y}B_{y}P_{1-z}C_{z}O₄₋ₙDₙ, when A is two or more elements, the foregoing limitation on the value range of x is not only a limitation on the stoichiometric number of each element as A but also a limitation on the sum of the stoichiometric numbers of all elements as A. For example, when A is two or more elements Al, A2, ..., An, the stoichiometric numbers x1, x2, ..., xn of each of A1, A2, ..., An must fall within the value range defined by this application for x, and the sum of x1, x2, ..., xn must also fall within the value range. Similarly, under the condition that B, C, and D are two or more elements, the limitation on the value ranges of the stoichiometric numbers of B, C, and D in this application also have the foregoing meaning.

Unless otherwise specified, in the chemical formula MₐP₂O₇, when M is two or more elements, the foregoing limitation on the value range of a is not only a limitation on the stoichiometric number of each element as M but also a limitation on the sum of the stoichiometric numbers of all elements as M. For example, when M is two or more elements: Ml, M2, ..., Mn, the stoichiometric numbers al, a2, ..., an of all of Ml, M2, ..., Mn must fall within the value range defined by this application for a, and the sum of al, a2, ..., an must also fall within the value range. Similarly, under the condition that M' is two or more elements in the chemical formula M'_{b}O_{c}, the limitation on the value range of the stoichiometric number b of M' in this application also has the foregoing meaning.

In some embodiments, when A is one, two, three, or four elements selected from Zn, Al, Na, K, Mg, Nb, Mo, and W, Aₓ is Qₓ₁Dₓ₂Eₓ₃Kₓ₄, where xl+x2+x3+x4=x, x1, x2, x3, and x4 are all positive numbers but are not all zero, Q, H, E, K are each independently one selected from Zn, Al, Na, K, Mg, Nb, Mo, and W. Optionally, one of x1, x2, x3, and x4 is zero and the rest is non-zero; more optionally, two of x1, x2, x3, and x4 are zero and the rest is non-zero; and further optionally, three of x1, x2, x3, and x4 are zero and the rest is non-zero. In the core LiₘAₓMn_{1-y}B_{y}P_{1-z}C_{z}O₄₋ₙDₙ, it is advantageous to dope one, two, three, or four of the foregoing element A at the Li site, optionally, dope one, two, or three of the foregoing element A. Furthermore, it is advantageous to dope one or two of element B at the Mn site, one or two of element C at the phosphorus site, and one or two of element D at the 0 site, which facilitates a uniform distribution of the doping elements.

In some embodiments, the values of m, x, y, z, and n satisfy the following conditions: to keep the entire core electrically neutral.

In the core LiₘAₓMn_{1-y}B_{y}P_{1-z}C_{z}O₄₋ₙDₙ, the magnitude of m is affected by the magnitudes of valence states of A, B, C, and D as well as the magnitudes of x, y, z, and n to ensure that the entire system exhibits electrical neutrality. A too-small m value may lead to a reduced amount of lithium contained in the entire core system and affect the extractable gram capacity of the material. The values of x, y, z, and n may limit the total amount of all doped elements. An excessively low doping amount makes the doping elements useless, and a y of more than 0.5 may lead to less Mn content in the system and affect the voltage plateau of the material. Element C doping occurs at P site. Because the P-0 tetrahedron is relatively stable and a too-large z value may affect the stability of the material, the z value is defined to 0.001-0.2.

In addition, the entire core system is kept electrically neutral, which can ensure that there are as few defects and impurity phases as possible in the positive electrode active material. If excess transition metal (for example, manganese) is present in the positive electrode active material, the excess transition metal is likely to precipitate in the form of an elementary substance or form impurity phases inside the lattice because the material system itself has a relatively stable structure, so maintaining electrical neutrality helps minimize the presence of such impurity phases. In addition, ensuring the electrical neutrality of the system can also lead to lithium vacancies in the material in some cases, resulting in better kinetic performance of the material.

Process control (for example, thoroughly mixing and grinding of the materials of various sources) can ensure that the elements are uniformly distributed in the lattice without aggregation. The positions of the main characteristic peaks in an XRD pattern of element-doped lithium manganese phosphate are the same as those of LiMnP04 without doping, indicating that the doping process did not introduce impurity phases. Therefore, the improvement of the core performance is mainly attributed to elemental doping rather than impurity phases. After the positive electrode active material is prepared, the inventors of this application cut the middle region of the prepared positive electrode active material particles by focused ion beam (FIB for short). Tests conducted through transmission electron microscope (TEM for short) and X-ray energy spectrum analysis (EDS for short) show that the elements are uniformly distributed without aggregation.

In some embodiments, values of a, b and c satisfy the following condition: making MₐP₂O₇ and M'_{b}O_{c} electrically neutral.

In some embodiments, the pyrophosphate in the first coating layer has an interplanar spacing of 0.293-0.326 nm and an included angle of 26.41°-32.57° for the (111) crystal orientation;
optionally, the interplanar spacing of the pyrophosphate in the first coating layer is 0.300-0.310 nm (for example, 0.303 nm); and/or
optionally, the included angle of the (111) crystal orientation of the pyrophosphate in the first coating layer is 29.00°-30.00° (for example, 29.496°).

With the interplanar spacing and the included angle of the (111) crystal orientation of the pyrophosphate in the first coating layer within the foregoing ranges, the impurity phase in the coating layer can be effectively avoided, thereby increasing the gram capacity of the material and improving the cycling performance and rate performance of the secondary battery.

In some embodiments, x is any value in the range from 0.001 to 0.005; and/or,
y is any value in the range from 0.01 to 0.5, optionally any value in the range from 0.25 to 0.5; and/or,
z is any value in the range from 0.001 to 0.005; and/or,
n is any value in the range from 0.001 to 0.005.

Thus, with x, y, z, and n within the foregoing ranges, the generation of Li/Mn antisite defects can be further reduced, the dissolution of manganese is reduced, and the lattice change rate is decreased, thereby further increasing the capacity of the secondary battery and improving the cycling performance, high-temperature storage performance, and safety performance of the secondary battery.

In some embodiments, a ratio of 1-y to y in the core is from 1 to 4, optionally from 1.5 to 3. Herein, y represents the sum of the stoichiometric numbers of doping elements at the Mn site. The energy density and cycling performance of the secondary battery prepared by using the positive electrode active material can be further improved when the foregoing conditions are satisfied.

In some embodiments, a ratio of m to x in the core is 1 to 1200, optionally 9 to 1100, and more optionally 190 to 998. Herein, x represents the sum of the stoichiometric numbers of doping elements at the Li site. The energy density and cycling performance of the secondary battery prepared by using the positive electrode active material can be further improved when the foregoing conditions are satisfied.

In some embodiments, a coating amount of the first coating layer is greater than 0% by weight and less than or equal to 7% by weight, optionally 4-5.6% by weight based on the weight of the core.

With the coating amount of the first coating layer within the foregoing ranges, the dissolution of manganese can be further inhibited and lithium ion transport can be further promoted, thereby maintaining low impedance in the secondary battery and improving the kinetic performance of the secondary battery.

In some embodiments, a weight ratio of the pyrophosphate to the oxide in the first coating layer is 1:3 to 3:1, optionally 1:3 to 1:1.

An appropriate ratio of the pyrophosphate to the oxide is conducive to fully utilizing the synergistic effect of the two, which can further inhibit the dissolution of manganese while maintaining low impedance in the secondary battery.

In some embodiments, the thickness of the first coating layer is 1-100 nm. As a result, the migration barrier of the transition metal in the first coating layer is high, which can effectively reduce the dissolution of the transition metal. The oxide therein has high stability, which can effectively mitigate the interface side reactions and thus enhance the high-temperature stability of the material.

In some embodiments, the thickness of the second coating layer is 1-100 nm.

In some embodiments, a crystallinity of the pyrophosphate in the first coating layer is 10% to 100%, optionally 50% to 100%.

In the first coating layer of the lithium manganese phosphate positive electrode active material in this application, the pyrophosphate having a specific crystallinity is conducive to maintaining the structural stability of the first coating layer and reducing lattice defects. This is conducive to fully utilizing the effect of the pyrophosphate on hindering the dissolution of manganese and also conducive to reducing the amount of lithium impurities contained on the surface and decreasing the valence state of surface oxygen, thereby reducing interface side reactions between the positive electrode material and the electrolyte, reducing the consumption of electrolyte, and improving the cycling performance and safety performance of the secondary battery.

In some embodiments, the crystallinity of the first coating layer of pyrophosphate of the positive electrode active material can be tested by conventional technical means in the art, for example, a density, infrared spectroscopy, differential scanning calorimetry, and nuclear magnetic resonance absorption method, or for example, an X-ray diffraction method.

The specific X-ray diffraction method for testing the crystallinity of the first coating layer of pyrophosphate of the positive electrode active material may include the following steps:
taking a specific amount of the positive electrode active material powder, and measuring a total scattering intensity by X-ray, where the total scattering intensity is a sum of scattering intensities of substances in the entire space and is only related to the intensity of the primary rays, the chemical structure of the positive electrode active material powder, a total number of electrons participating in the diffraction, that is, the mass, and not to the order state of the sample; then separating crystalline scattering from non-crystalline scattering in a diffraction pattern, where the crystallinity is a ratio of a scattering intensity of the crystalline part to the total scattering intensity.

It should be noted that in some embodiments, the crystallinity of the pyrophosphate in the coating layer can be adjusted, for example, by adjusting the process conditions of the sintering process, for example sintering temperature and sintering time.

In some embodiments, a coating amount of the second coating layer is greater than 0% by weight and less than or equal to 6% by weight, optionally 3-5% by weight based on the weight of the core.

The carbon-containing layer as the second coating layer can play a "barrier" function to avoid direct contact between the positive electrode active material and the electrolyte, thereby reducing the corrosion of the active material by the electrolyte and improving the safety performance of the battery at high temperatures. In addition, the carbon-containing layer has high electrical conductivity, which can reduce the internal resistance of the battery, thereby improving the kinetic performance of the secondary battery. With the coating amount of the second coating layer within the foregoing ranges, the kinetic performance and safety performance of the secondary battery can be further improved while a high gram capacity of the positive electrode active material is maintained.

In some embodiments, in the positive electrode active material, A is any element selected from Zn, Al, Na, K, Mg, Nb, Mo, and W, and optionally, A is Mg or Nb; and/or
B is at least two elements selected from Ti, V, Zr, Fe, Ni, Mg, Co, Ga, Sn, Sb, Nb, and Ge, optionally, B is at least two elements selected from Fe, Ti, V, Co, and Mg, and more optionally, B is a combination of element Fe and at least one element selected from Ti, V, Co, and Mg; and/or
C is any element selected from B, S, Si, and N, and optionally, C is S; and/or
D is any element selected from S, F, Cl, and Br, and optionally, D is F.

Selection of the doping elements from the foregoing range is conducive to enhancing the doping effect to further reduce the lattice change rate, thereby inhibiting the dissolution of manganese and reducing the consumption of the electrolyte and active lithium, and is also conducive to further reducing the surface oxygen activity and reducing interface side reactions between the positive electrode active material and the electrolyte, thereby improving the cycling performance and high-temperature storage performance of the battery.

In some embodiments, the positive electrode active material has a Li/Mn antisite defect concentration of 4% or less, optionally 2% or less. In the positive electrode active material in this application, the Li/Mn antisite defect refers to site exchange of Li⁺ and Mn²⁺ in LiMnP04 lattice. Because the Li⁺ transport channel is a one-dimensional channel and Mn²⁺ has difficulty in migrating in the Li⁺ transport channel, Mn²⁺ of the antisite defect hinders the Li⁺ transport. With Li/Mn antisite defect concentration controlled at a low level, the gram capacity of the positive electrode active material and the rate performance of the secondary battery can be improved. In this application, the antisite defect concentration can be determined, for example, according to JIS K 0131-1996.

In some embodiments, the lattice change rate of the positive electrode active material before and after complete lithium deintercalation and intercalation is 9.8% or less, optionally 6% or less, and more optionally 4% or less. The processes of lithium deintercalation and intercalation of LiMnP04 are two-phase reactions. The interface stress between two phases is determined by the magnitude of the lattice change rate, and a smaller lattice change rate indicates a lower interface stress, making Li⁺ transport easier. Therefore, a decrease in the lattice change rate of the core will be conducive to enhancing Li⁺ transport capacity, thereby improving the rate performance of the secondary battery. The lattice change rate can be measured by a method known in the art, such as X-ray diffraction mapping (XRD).

In some embodiments, the valence state of surface oxygen of the positive electrode active material is -1.55 or less, optionally -1.88 or less, and more optionally -1.98 to 1.88. This is due to the fact that a higher valence state of oxygen in the compound indicates a higher electron gaining capability, that is, stronger oxidation. In the positive electrode active material in this application, with the surface valence state of oxygen controlled at a lower level, the reactivity of the surface of the positive electrode material can be reduced and the interface side reactions between the positive electrode active material and the electrolyte can be reduced, thereby improving the cycling performance and high-temperature storage performance of the secondary battery. The valence state of surface oxygen can be measured by a method known in the art, such as electron energy loss spectroscopy (EELS).

In some embodiments, a compacted density of the positive electrode active material under 3 tons (T) is 1.89 g/cm³ or more, optionally 2.0 g/cm³ or more, and more optionally 2.2 g/cm³ or more. A higher compacted density of the positive electrode active material, that is, a higher weight per unit volume of the active substance, will be more conducive to improving the volumetric energy density of the secondary battery. In this application, the compacted density can be determined, for example, according to GB/T 24533-2009.

In some embodiments, a button cell containing the positive electrode active material has an average discharge voltage of 3.5 V or more and a discharge gram capacity of 140 mAh/g or more; optionally, an average discharge voltage of 3.6 V or more and a discharge gram capacity of 145 mAh/g or more.

Despite an average discharge voltage of 4.0 V or more, LiMnP04 without doping has a relatively low discharge gram capacity, generally less than 120 mAh/g, and therefore, has a relatively low energy density. Adjusting the lattice change rate by doping can enable LiMnP04 to have a significant increase in the discharge gram capacity and a significant increase in the overall energy density, with a slight decrease in the average discharge voltage.

In some embodiments, m is any value selected in the range from 0.97 to 1.01.

In some embodiments, x is any value selected in the range from 0.001 to 0.005.

In some embodiments, y is any value selected in the range from 0.25 to 0.5.

In some embodiments, a is any value in the range from 1 to 4. For example, a is 1, 2, 3, or 4.

In some embodiments, b is any value value in the range from 1 to 2. For example, b is 1, or 2.

In some embodiments, c is any value in the range from 1 to 5, optionally any value in the range from 1 to 3. For example, c is 1, 2, 3, 4, or 5.

### [Preparation method of positive electrode active material]

This application provides a preparation method of positive electrode active material, which includes the following steps:
a step of providing a core material: the core including LiₘAₓMn_{1-y}B_{y}P_{1-z}C_{z}O₄₋ₙDₙ, where m is any value selected in the range from 0.5 to 1.2, optionally any value selected in the range from 0.9 to 1.1; x is any value selected in the range from 0.001 to 0.5, optionally any value selected in the range from 0.001 to 0.1; y is any value selected in the range from 0.001 to 0.5; z is any value selected in the range from 0.001 to 0.2, optionally any value selected in the range from 0.001 to 0.1; is any value selected in the range from 0.001 to 0.5, optionally any value selected in the range from 0.001 to 0.1; A is one or more elements selected from of Zn, Al, Na, K, Mg, Nb, Mo, and W, optionally one or more elements selected from Al, Mg, Nb, Mo, and W; B is one or more elements selected from Ti, V, Zr, Fe, Ni, Mg, Co, Ga, Sn, Sb, Nb, and Ge, optionally one or more elements selected from Ti, V, Fe, Ni, Mg, and Co; C is one or more elements selected from B, S, Si, and N, optionally one or more elements selected from S, Si, and N; and D is one or more elements selected from S, F, Cl, and Br, optionally one or more elements selected from F, Cl, and Br; and
a coating step: providing powder including pyrophosphate MₐP₂O₇ and a suspension including a carbon source and an oxide M'_{b}O_{c}, and mixing the core material, the powder including pyrophosphate MₐP₂O₇, and the suspension including the carbon source and the oxide M'_{b}O_{c}, followed by sintering, to obtain a positive electrode active material, where a is greater than 0 and less than or equal to 4, optionally greater than 0 and less than or equal to 3; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li and Fe; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, more optionally one or more elements selected from Mg, Al, V, Cu, Zn, Zr, and W; and
where the positive electrode active material has a core-shell structure, including a core and a shell enveloping the core, the core including LiₘAₓMn_{1-y}B_{y}P_{1-z}C_{z}O₄₋ₙDₙ and the shell including a first coating layer covering the core and a second coating layer covering the first coating layer; where the first coating layer includes a crystalline pyrophosphate MₐP₂O₇ and an oxide M'_{b}O_{c}, and the second coating layer includes carbon. A, B, C, D, M, M', m, x, y, z, n, a, b, and c are defined as above.

Thus, the applicant has surprisingly found that: with a positive electrode active material obtained by doping a specific amount of a specific element at Li, Mn, P, and 0 sites of the compound LiMnPO₄, coating surface of the compound with a first coating layer containing the crystalline pyrophosphate and the oxide, and coating surface of the first coating layer with a second coating layer containing carbon, the generation of Li/Mn antisite defects can be significantly reduced, the dissolution of manganese is reduced, and the lattice change rate is decreased, thereby increasing the capacity of the secondary battery and improving the cycling performance, high-temperature storage performance and safety performance of the secondary battery.

In some embodiments, the step of providing a core material includes the following steps:
step (1): mixing a manganese source, a source of element B, an acid, and an optional solvent to obtain a mixture; and
step (2): mixing the mixture with a lithium source, a phosphorus source, a source of element A, a source of element C, a source of element D, and an optional solvent, followed by drying and sintering, to obtain a core material including LiₘAₓMn_{1-y}B_{y}P_{1-z}C_{z}O₄₋ₙDₙ.

In some embodiments, the step (1) is performed at 60°C-120°C, optionally at 70°C-120°C (for example, about 60°C, about 70°C, about 80°C, about 90°C, about 100°C, about 110°C, or about 120°C); and/or, in the step (1), the mixing is carried out by stirring at 200-800 rpm (for example, 200 rpm, 300 rpm, 400 rpm, 500 rpm, 600 rpm, 700 rpm, or 800 rpm) and optionally for 1-9 h (more optionally for 3-7 h, for example, about 2 h, about 3 h, about 4 h, about 5 h, about 6 h, about 7 h, about 8 h, or about 9 h).

In some embodiments, in the step (2), the mixing is carried out for 8-15 h (for example, about 8 h, about 9 h, about 10 h, about 11 h, about 12 h, about 13 h, about 14 h, or about 15 h) and optionally at 20-120°C, optionally 40-120°C (for example, about 30°C, about 50°C, about 60°C, about 70°C, about 80°C, about 90°C, about 100°C, about 110°C, or about 120°C).

When the temperature and time during the preparation of core particles are within the foregoing ranges, the cores obtained from the preparation and the positive electrode active material made therefrom have fewer lattice defects, which is conducive to inhibiting the dissolution of manganese and reducing the interface side reactions between the positive electrode active material and the electrolyte, thereby improving the cycling performance and safety performance of the secondary battery.

In some embodiments, in the step (2), the mixing is carried out at a pH of 3.5-6, optionally a pH of 4-6, and more optionally a pH of 4-5. It should be noted that the pH may be adjusted in this application by a method commonly used in the art, for example, the addition of an acid or alkali.

In some optional embodiments, the mixture obtained in the step (1) is filtered, dried, and ground to obtain element B-doped manganese salt particles with a particle size Dv50 of 50-200 nm, and the element B-doped manganese salt particles are used in the step (2) to mix with the lithium source, the phosphorus source, the source of element A, the source of element C, the source of element D, and an optional solvent.

In some embodiments, optionally, a molar ratio of the mixture or element A-doped manganese salt particles to the lithium source and the phosphorus source in the step (2) is 1:0.4-2.1:0.1-2.1, and optionally about 1:0.4-0.5:0.1-1.

In some embodiments, in the step (2), the sintering is carried out at 600-900°C for 4-10 hours; optionally, the sintering may be carried out at about 650°C, about 700°C, about 750°C, about 800°C, about 850°C, or about 900°C for about 2 hours, about 3 hours, about 4 hours, about 5 hours, about 6 hours, about 7 hours, about 8 hours, about 9 hours, or about 10 hours; optionally, the sintering is carried out under protection of an inert gas or a mixed atmosphere of inert gas and hydrogen, and more optionally, the protective atmosphere is a gas mixture of 70-90% nitrogen and 10-30% hydrogen by volume. The sintering temperature and sintering time may be within any range defined by any of the foregoing values, which can improve the crystallinity of the core and reduce the generation of impurity phases so that the core maintains a specific granularity, thereby improving the gram capacity and compacted density of the positive electrode active material and improving the overall performance of the secondary battery, including the rate performance.

In some optional embodiments, in the step (2), the drying is carried out by a spray drying apparatus.

In some optional embodiments, in the step (2), the mixing is accompanied by grinding.

In some embodiments, the powder including pyrophosphate MₐP₂O₇ is prepared by the following steps:
mixing a source of element M, a phosphorus source, and an optional solvent to obtain a mixture, adjusting the pH of the mixture to 4-6, continuing the mixing, and then carrying out drying and sintering.

In some embodiments, in the steps of preparing the powder including the pyrophosphate MₐP₂O₇, the drying is carried out at 100°C-300°C for 4-8 h, optionally at 150°C-200°C; and/or the sintering is carried out at 500°C-800°C under protection of an inert gas for 4-10 h, optionally at 650°C-800°C.

In some embodiments, in the coating step, the sintering temperature is 500-800°C and the sintering time is 4-10 h.

The source of the material is not particularly limited in the preparation method in this application, and the source of an element may include one or more of elemental substance, sulfates, nitrates, phosphates, oxalates, carbonates, oxides, and hydroxides of the element, provided that the source can achieve the objectives of the preparation method in this application.

In some embodiments, the source of element A is one or more selected from elemental substance, oxides, phosphates, oxalates, carbonates, and sulfates of element A; and/or,
the source of element B is one or more selected from elementary substance, oxides, phosphates, oxalates, carbonates, and sulfates of element B; and/or,
the source of element C is one or more selected from sulfates, borates, nitrates, and silicates of element C; and/or,
the source of element D is one or more selected from elementary substance and ammonium salts of element D.

In some embodiments, the source of element M is one or more selected from elementary substance, carbonates, sulfates, halides, nitrates, organic acid salts, oxides, and hydroxides of element M.

In some embodiments, the source of element M' is one or more selected from elementary substance, carbonates, sulfates, halides, nitrates, organic acid salts, oxides, and hydroxides of element M'.

The amount of elements A, B, C, D, M, and M' added from the respective sources depends on a target doping amount, and the ratio of amounts of the lithium, manganese, and phosphorus sources conforms to the stoichiometric ratio.

In this application, the manganese source may be a manganese-containing substance known in the art that can be used for preparing lithium manganese phosphate. For example, the manganese source may be one or more selected from elemental manganese, manganese dioxide, manganese phosphate, manganese oxalate, and manganese carbonate.

In this application, the acid may be one or more selected from organic acids such as hydrochloric acid, sulfuric acid, nitric acid, phosphoric acid, silicic acid, metasilicic acid, and organic acids such as oxalic acid. In some embodiments, the acid is a dilute organic acid with a concentration of 60% or less by weight.

In this application, the lithium source may be a lithium-containing substance known in the art that can be used for preparing lithium manganese phosphate. For example, the lithium source is one or more selected from lithium carbonate, lithium hydroxide, lithium phosphate, and lithium dihydrogen phosphate.

In this application, the phosphorus source may be a phosphorus-containing substance known in the art that can be used for preparing lithium manganese phosphate. For example, the phosphorus source is one or more selected from diammonium hydrogen phosphate, diammonium dihydrogen phosphate, ammonium phosphate, and phosphoric acid.

In this application, as an example, the carbon source is one or more selected from starch, sucrose, glucose, polyvinyl alcohol, polyethylene glycol, and citric acid.

### [Positive electrode plate]

This application provides a positive electrode plate including a positive electrode current collector and a positive electrode film layer disposed on at least one surface of the positive electrode current collector, where the positive electrode film layer includes the foregoing positive electrode active material or a positive electrode active material prepared by the foregoing preparation method, and a percentage of the positive electrode active material in the positive electrode film layer is 10% or more by weight based on a total weight of the positive electrode film layer.

In some embodiments, the percentage of the positive electrode active material in the positive electrode film layer is 90-99.5% by weight based on the total weight of the positive electrode film layer. This ensures that the secondary battery has a high capacity and good cycling performance, high-temperature storage performance, and safety performance.

In some embodiments, the positive electrode current collector may be a metal foil or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode film layer may further include other positive electrode active materials well known in the art and used for batteries. For example, the positive electrode active material may include at least one of the following materials: olivine-structured lithium-containing phosphate and modified compounds thereof. However, this application is not limited to such materials, and may alternatively use other conventional well-known materials that can be used as positive electrode active materials for batteries. One of these positive electrode active materials may be used alone, or two or more of them may be used in combination. An example of the olivine-structured lithium-containing phosphate may include but is not limited to at least one of lithium iron phosphate (for example, LiFePO₄ (or LFP for short)), composite materials of lithium iron phosphate and carbon, lithium manganese phosphate (for example, LiMnP04), composite materials of lithium manganese phosphate and carbon, lithium manganese iron phosphate, and composite materials of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofibers.

### [Negative electrode plate]

The negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compounds, silicon-carbon composites, silicon-nitrogen composites, and silicon alloys. The tin-based material may be selected from at least one of elemental tin, tin-oxygen compound, or tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. In an example, the binder may be selected from at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative-electrode film layer further optionally includes a conductive agent. For example, the conductive agent may be selected from at least one of superconducting carbon, acetylene black, carbon black, Ketjen black, carbon dots, carbon nanotubes, graphene, and carbon nanofibers.

In some embodiments, the negative electrode film layer may further optionally include other adjuvants such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is liquid and includes an electrolyte salt and a solvent.

In some embodiments, the electrolytic salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

This application does not impose any special limitations on a shape of the secondary battery, and the secondary battery may be cylindrical, rectangular, or of any other shapes. For example, FIG. 2 shows a secondary battery 5 of a rectangular structure as an example.

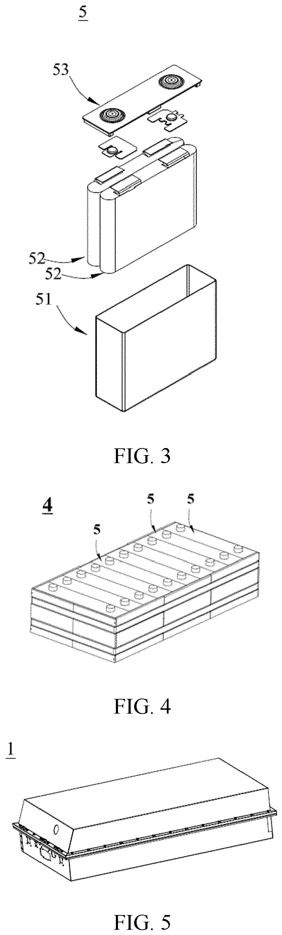

In some embodiments, referring to FIG. 3, the outer package may include a housing 51 and a cover plate 53. The housing 51 may include a base plate and side plates connected onto the base plate, and the base plate and the side plates enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or lamination. The electrode assembly 52 is enclosed in the accommodating cavity. The electrolyte infiltrates into the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Referring to FIG. 4, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened by using fasteners.

Optionally, the battery module 4 may further include a housing with accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

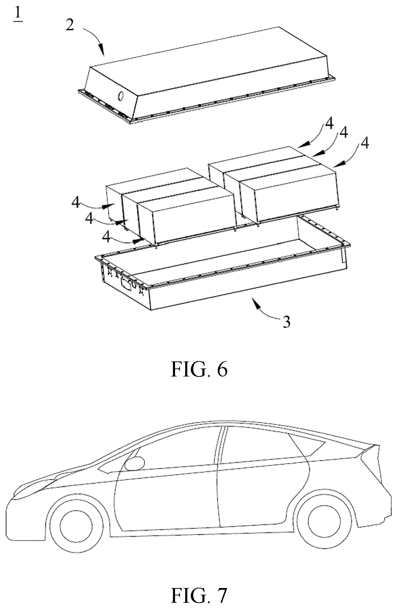

FIG. 5 and FIG. 6 show a battery pack 1 as an example. Referring to FIG. 5 and FIG. 6, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated. The amounts of components in the examples of the present invention are all measured by mass without water of crystallization, unless otherwise specified.

The sources of raw materials used in the preparation examples and examples of this application are as follows:

| Name | Chemical formula | Manufacturer | Specification |
|---|---|---|---|
| Manganese carbonate | MnCO₃ | Shandong Xiya Chemical Industry Co., Ltd. | 1 Kg |
| Lithium carbonate | Li₂CO₃ | Shandong Xiya Chemical Industry Co., Ltd. | 1 Kg |
| Magnesium carbonate | MgCOs | Shandong Xiya Chemical Industry Co., Ltd. | 1 Kg |
| Zinc carbonate | ZnCO₃ | Wuhan Xinru Chemical Industry Co., Ltd. | 25 Kg |
| Ferrous carbonate | FeCOs | Xi'an Lanzhiguang Fine Material Co., Ltd. | 1 Kg |
| Nickel sulfate | NiCO₃ | Shandong Xiya Chemical Industry Co., Ltd. | 1 Kg |
| Titanium sulfate | Ti(SO₄)₂ | Shandong Xiya Chemical Industry Co., Ltd. | 1 Kg |
| Cobalt sulfate | CoSO₄ | Xiamen Simagchem Co., Ltd. | 500 g |
| Vanadium dichloride | VCl₂ | Shanghai Jinjinle Industry Co., Ltd. | 1 Kg |
| Oxalic acid dihydrate | C₂H₂O₄^{•}2H₂O | Shanghai Jinjinle Industry Co., Ltd. | 1 Kg |
| Ammonium dihydrogen phosphate | NH₄H₂PO₄ | Shanghai Chengshao Biotechnology Co., Ltd. | 500 g |
| Sucrose | C₁₂H₂₂O₁₁ | Shanghai Yuanye Biotechnology Co., Ltd. | 100 g |
| Sulfuric acid | H₂SO₄ | Shenzhen Haishi'an Biotechnology Co., Ltd. | Mass fraction of 60% |
| Nitric acid | HNO₃ | Anhui Lingtian Fine Chemical Co., Ltd. | Mass fraction of 60% |
| Metasilicic acid | H₂SiO₃ | Shanghai Yuanye Biotechnology Co., Ltd. | 100 g |
| Boric acid | H₃BO₃ | Changzhou Qidi Chemical Co., Ltd. | 1 Kg |

### Example 1-1

### Step S1: Preparation of doped manganese oxalate

1.3 mol of MnSO₄·H₂O and 0.7 mol of FeSO₄·H₂O were thoroughly mixed in a mixer for 6 hours; and a resulting mixture was transferred to a reactor, with addition of 10 L of deionized water and 2 mol of oxalic acid dihydrate. The reactor was heated to 80°C, and the stirring was carried out at 600 rpm for 6 hours until the reaction was terminated (no air bubbles were generated), and a Fe doped manganese oxalate suspension was obtained. The suspension was then filtered and a resulting filter cake was dried at 120°C and then ground to obtain Fe doped manganese oxalate particles with a median particle size Dᵥ50 of 100 nm.

### Step S2: Preparation of core containing Li_{0.994}Mo_{0.001}Mn_{0.65}Fe_{0.35}P_{0.999}Si_{0.001}O_{3.999}F_{0.001}

1 mol of Fe doped manganese oxalate particles, 0.497 mol of lithium carbonate, 0.001 mol of Mo(SO₄)₃, an aqueous phosphoric acid solution containing 0.999 mol of phosphoric acid with a concentration of 85%, 0.001 mol of H₄SiO₄, 0.0005 mol of NH₄HF₂ and 0.005 mol of sucrose were added to 20 L of deionized water, and a resulting mixture was transferred to a sand mill and fully ground and stirred for 10 hours to obtain a slurry; the slurry was transferred to a spray drying apparatus for spray drying and granulation, with the drying temperature set to 250°C and the drying time to 4 hours, and particles were obtained; and the particles were sintered at 700 °C for 10 h in a protective atmosphere of nitrogen (90% v/v) + hydrogen (10% v/v) to obtain a core material. The element content of the core material was examined by inductively coupled plasma emission spectrometry (ICP) to obtain a core with the chemical formula as shown above.

### Step S3: Preparation of lithium iron pyrophosphate powder

4.77 g of lithium carbonate, 7.47 g of ferrous carbonate, 14.84 g of ammonium dihydrogen phosphate, and 1.3 g of oxalic acid dihydrate were dissolved in 50 ml of deionized water; a resulting mixture had a pH of 5 and was stirred for 2 hours for the reaction mixture to fully react; then the solution after reaction was warmed up to 80°C and maintained at that temperature for 4 hours to obtain a suspension containing Li₂FeP₂O₇; the suspension was filtered, washed with deionized water, and dried at 120°C for 4 h to obtain a powder; and the powder was sintered at 650°C in a nitrogen atmosphere for 8 hours, naturally cooled to room temperature, and then ground to obtain Li₂FeP₂O₇ powder.

### Step S4: Preparation of suspension containing aluminum trioxide and sucrose

4.71 g of nano-A1203 (with a particle size of about 20 nm) and 3.73 g of sucrose (denoted as C₁₂H₂₂O₁₁, the same applies hereinafter) were added into 150 ml of deionized water, followed by stirring for 6 hours to mix thoroughly. Then a resulting mixture was warmed to 120°C and maintained at the temperature for 6 h to obtain a suspension containing aluminum trioxide and sucrose.

### Step S5: Preparation of two coating layers

157.21 g of the foregoing core and 1.57 g of the foregoing lithium iron pyrophosphate (Li₂FeP₂O₇) powder were added to the suspension containing aluminum trioxide and sucrose prepared in the previous step; the foregoing substances were stirred and mixed to uniformity, then transferred to a vacuum oven to dry at 150°C for 6 hours; a resulting product was then dispersed by sand milling; and after dispersion, a product resulted therefrom was sintered in a nitrogen atmosphere at 700°C for 6 hours to obtain lithium manganese phosphate coated with two layers.

### Examples 1-2 to 1-59 and Comparative examples 1 to 12

The positive electrode active materials in Examples 1-2 to 1-59 and Comparative examples 1 to 12 were made in methods similar to that in Example 1, and the differences in the preparation of the positive electrode active materials are shown in Tables 1-4.

Comparative examples 1 to 9 do not involve steps S3-S5; Comparative example 10 does not involve step S4; and Comparative example11 does not involve step S3.

**Table 1: Preparation of doped manganese oxalate and preparation of core (steps S1-S2)**

| No. | Core chemical formula* | Raw materials used in step S1 | Raw materials used in step S2 |
|---|---|---|---|
| Comparative example 1 | LiMnPO₄ | 1.0 mol of MnSO₄·H₂O; 10 L of water; and 1 mol of oxalic acid dihydrate | 1 mol of manganese oxalate particles obtained in step S1; 0.5 mol of lithium carbonate; aqueous phosphoric acid solution with a concentration of 85%, containing 1 mol of phosphoric acid; 0.005 mol of sucrose; and 20 L of water |
| Comparative example 2 | LiMn_{0.85}Fe_{0.15}PO₄ | 0.85 mol of MnSO₄·H₂O; 0.15 mol of FeSO₄·H₂O; 10 L of water; and 1 mol of oxalic acid dihydrate | 1 mol of doped manganese oxalate particles obtained in step S1; 0.5 mol of lithium carbonate; aqueous phosphoric acid solution with a concentration of 85%, containing 1 mol of phosphoric acid; 0.005 mol of sucrose; and 20 L of water |
| Comparative example 3 | Li_{0.990}Mg_{0.005}Mn_{0.95}Zn_{0.05}PO₄ | 1.9 mol of MnSO₄·H₂O; 0.1 mol of ZnSO₄; 10 L of water; and 2 mol of oxalic acid dihydrate | 1 mol of doped manganese oxalate particles obtained in step S1; 0.495 mol of lithium carbonate; 0.005 mol of MgSO₄; aqueous phosphoric acid solution with a concentration of 85%, containing 1 mol of phosphoric acid; 0.005 mol of sucrose; and 20 L of water |
| Comparative example 4 | Li_{0.90}Nb_{0.01}Mn_{0.6}Fe_{0.4}PO_{3.95}F_{0.05} | 1.2 mol of MnSO₄·H₂O; 0.8 mol of FeSO₄·H₂O; 10 L of water; and 2 mol of oxalic acid dihydrate | 1 mol of Fe doped manganese oxalate particles obtained in step S1; 0.45 mol of lithium carbonate; 0.005 mol of Nb₂(SO₄)₅; aqueous phosphoric acid solution with a concentration of 85%, containing 1 mol of phosphoric acid; 0.025 mol of NH₄HF₂; 0.005 mol of sucrose; and 20 L of water |
| Comparative example 5 | Li_{0.76}Mg_{0.13}Mn_{0.7}Fe_{0.3}P_{0.999}Si_{0.001}O_{3.999}F_{0.001} | 1.4 mol of MnSO₄·H₂O; 0.6 mol of FeSO₄·H₂O; 10 L of water; and 2 mol of oxalic acid dihydrate | 1 mol of Fe doped manganese oxalate particles obtained in step S1; 0.38 mol of lithium carbonate; 0.12 mol of MgSO₄; aqueous phosphoric acid solution with a concentration of 85%, containing 0.999 mol of phosphoric acid; 0.001 mol of H₄SiO₄; 0.0005 mol of NH₄HF₂; 0.005 mol of sucrose; and 20 L of water |
| Comparative example 6 | Li₀₉₉₈Mg_{0.001}Mn_{0.4}Zn_{0.6}P_{0.999}Si_{0.001}O_{3.999}F_{0.001} | 0.8 mol of MnSO₄·H₂O; 1.2 mol of ZnSO₄; 10 L of water; and 2 mol of oxalic acid dihydrate | 1 mol of doped manganese oxalate particles obtained in step S1; 0.499 mol of lithium carbonate; 0.001 mol of MgSO₄; aqueous phosphoric acid solution with a concentration of 85%, containing 0.999 mol of phosphoric acid; 0.001 mol of H₄SiO₄; 0.0005 mol of NH₄HF₂; 0.005 mol of sucrose; and 20 L of water |
| Comparative example 7 | Li_{1.068}Mg_{0.001}Mn_{0.7}Fe_{0.3}P_{0.88}Si_{0.12}O_{3.95}F_{0.05} | 1.4 mol of MnSO₄·H₂O; 0.6 mol of FeSO₄·H₂O; 10 L of water; and 2 mol of oxalic acid dihydrate | 1 mol of Fe doped manganese oxalate particles obtained in step S1; 0.534 mol of lithium carbonate; 0.001 mol of MgSO₄; aqueous phosphoric acid solution with a concentration of 85%, containing 0.88 mol of phosphoric acid; 0.12 mol of H₄SiO₄; 0.025mol of NH₄HF₂; 0.005 mol of sucrose; and 20 L of water |
| Comparative example 8 | Li_{0.948}Mg_{0.001}Mn_{0.6}Fe_{0.4}P_{0.93}Si_{0.07}O_{3.88}F_{0.12} | 1.2 mol of MnSO₄·H₂O; 0.8 mol of FeSO₄·H₂O; 10 L of water; and 2 mol of oxalic acid dihydrate | 1 mol of Fe doped manganese oxalate particles obtained in step S1; 0.474 mol of lithium carbonate; 0.001 mol of MgSO₄; aqueous phosphoric acid solution with a concentration of 85%, containing 0.93 mol of phosphoric acid; 0.07mol of H₄SiO₄; 0.06 mol of NH₄HF₂; 0.005 mol of sucrose; and 20 L of water |
| Comparative examples 9-12, Example 1-1, Examples 1-12 to 1-16, Examples 1-33 to 1-44, 1-49, 1-5 1 and 1-52, and 1-59 | Li_{0.994}Mo_{0.001}Mn_{0.65}Fe_{0.35}P_{0.999}Si_{0.001}O_{3.999}F_{0.001} | 1.3 mol of MnSO₄·H₂O; 0.7 mol of FeSO₄·H₂O; 10 L of water; and 2 mol of oxalic acid dihydrate | 1 mol of doped manganese oxalate particles obtained in step S1; 0.497 mol of lithium carbonate; 0.001 mol of Mo(SO₄)₃; aqueous phosphoric acid solution with a concentration of 85%, containing 0.999 mol of phosphoric acid; 0.001 mol of H₄SiO₄; 0.0005 mol of NH₄HF₂; 0.005 mol of sucrose; and 20 L of water |
| Example 1-2 | Li_{0.977}Mg_{0.001}Mn_{0.65}Fe_{0.34}Ti_{0.01}P_{0.999}N_{0.001}O_{3.999}F_{0.001} | 1.3 mol of MnSO₄·H₂O; 0.68 mol of FeSO₄·H₂O; 10 L of water; 2 mol of oxalic acid dihydrate; and 0.02 mol of Ti(SO₄)₂ | 1 mol of doped manganese oxalate particles obtained in step S1; 0.4885 mol of lithium carbonate; 0.001 mol of MgSO₄; aqueous phosphoric acid solution with a concentration of 85%, containing 0.999 mol of phosphoric acid; 0.001 mol of HNO₃; 0.0005 mol of NH₄HF₂; 0.005 mol of sucrose; and 20 L of water |
| Example 1-3 | Li_{0.993}W_{0.001}Mn_{0.65}Fe_{0.35}P_{0.999}S_{0.001}O_{3.999}F_{0.001} | 1.3 mol of MnSO₄·H₂O; 0.7 mol of FeSO₄·H₂O; 10 L of water; and 2 mol of oxalic acid dihydrate | 1 mol of doped manganese oxalate particles obtained in step S1; 0.496 mol of lithium carbonate; 0.001 mol of W(SO₄)₃; aqueous phosphoric acid solution with a concentration of 85%, containing 0.999 mol of phosphoric acid; 0.001 mol of H₂SO₄; 0.0005 mol of NH₄HF₂; 0.005 mol of sucrose; and 20 L of water |
| Example 1-4 | Li_{0.997}Al_{0.001}Mn_{0.65}Fe_{0.35}P_{0.999}Si_{0.001}O_{3.999}Cl_{0.001} | 1.3 mol of MnSO₄·H₂O; 0.7 mol of FeSO₄·H₂O; 10 L of water; and 2 mol of oxalic acid dihydrate | 1 mol of doped manganese oxalate particles obtained in step S1; 0.4985 mol of lithium carbonate; 0.0005 mol of Al₂(SO₄)₃; aqueous phosphoric acid solution with a concentration of 85%, containing 0.999 mol of phosphoric acid; 0.001 mol of H₄SiO₄; 0.0005 mol of NH₄HCl₂; 0.005 mol of sucrose; and 20 L of water |
| Example 1-5 | Li_{0.993}Nb_{0.001}Mn_{0.65}Fe_{0.345}V_{0.005}P_{0.999}S_{0.001}O_{3.999}F_{0.001} | 1.3 mol of MnSO₄·H₂O; 0.69 mol of FeSO₄·H₂O; 10 L of water; 2 mol of oxalic acid dihydrate; and 0.01 mol of VCl₂ | 1 mol of doped manganese oxalate particles obtained in step S1; 0.4965 mol of lithium carbonate; 0.0005 mol of Nb₂(SO₄)₅; aqueous phosphoric acid solution with a concentration of 85%, containing 0.999 mol of phosphoric acid; 0.001 mol of H₂SO₄; 0.0005 mol of NH₄HF₂; 0.005 mol of sucrose; and 20 L of water |
| Example 1-6 | Li_{0.993}Nb_{0.001}Mn_{0.65}Fe_{0.34}V_{0.005}Mg_{0.005}P_{0.999}S_{0.001}O_{3.999}F_{0.001} | 1.3 mol of MnSO₄·H₂O; 0.68 mol of FeSO₄·H₂O; 10 L of water; 2 mol of oxalic acid dihydrate; 0.01 mol of VCl₂; and 0.01 mol of MgSO₄ | 1 mol of doped manganese oxalate particles obtained in step S1; 0.4965 mol of lithium carbonate; 0.0005 mol of Nb₂(SO₄)₅; aqueous phosphoric acid solution with a concentration of 85%, containing 0.999 mol of phosphoric acid; 0.001 mol of H₂SO₄; 0.0005 mol of NH₄HF₂; 0.005 mol of sucrose; and 20 L of water |
| Example 1-7 | Li_{0.993}Nb_{0.001}Mn_{0.65}Fe_{0.34}V_{0.005}Co_{0.005}P_{0.999}S_{0.001}O_{3.999}F_{0.001} | 1.3 mol of MnSO₄·H₂O; 0.68 mol of FeSO₄·H₂O; 10 L of water; 2 mol of oxalic acid dihydrate; 0.01 mol of VCl₂; and 0.01 mol of CoSO₄ | 1 mol of doped manganese oxalate particles obtained in step S1; 0.4965 mol of lithium carbonate; 0.0005 mol of Nb₂(SO₄)₅; aqueous phosphoric acid solution with a concentration of 85%, containing 0.999 mol of phosphoric acid; 0.001 mol of H₂SO₄; 0.0005 mol of NH₄HF₂; 0.005 mol of sucrose; and 20 L of water |
| Example 1-8 | Li_{0.993}Nb_{0.001}Mn_{0.65}Fe_{0.34}V_{0.005}Ni_{0.005}P_{0.999}S_{0.001}O_{3.999}F_{0.001} | 1.3 mol of MnSO₄·H₂O; 0.68 mol of FeSO₄·H₂O; 10 L of water; 2 mol of oxalic acid dihydrate; 0.01 mol of VCl₂; and 0.01 mol of NiSO₄ | 1 mol of doped manganese oxalate particles obtained in step S1; 0.4965 mol of lithium carbonate; 0.0005 mol of Nb₂(SO₄)₅; aqueous phosphoric acid solution with a concentration of 85%, containing 0.999 mol of phosphoric acid; 0.001 mol of H₂SO₄; 0.0005 mol of NH₄HF₂; 0.005 mol of sucrose; and 20 L of water |
| Example 1- 9 | Li_{0.991}Nb_{0.001}Mn_{0.001}Fe_{0.349}Ti_{0.001}P_{0.999}S_{0.001}O_{3.999}Cl_{0.001} | 1.3 mol of MnSO₄·H₂O; 0.698 mol of FeSO₄·H₂O; 10 L of water; 2 mol of oxalic acid dihydrate; and 0.002 mol of Ti(SO₄)₂ | 1 mol of doped manganese oxalate particles obtained in step S1; 0.4955 mol of lithium carbonate; 0.0005 mol of Nb₂(SO₄)₅; aqueous phosphoric acid solution with a concentration of 85%, containing 0.999 mol of phosphoric acid; 0.001 mol of H₂SO₄; 0.0005 mol of NH₄HCl₂; 0.005 mol of sucrose; and 20 L of water |
| Example 1-10 | Li_{0.995}Nb_{0.001}Mn_{0.65}Fe_{0.34}V_{0.005}Mg_{0.005}P_{0.999}Si_{0.001}O_{3.999}Br_{0.001} | 1.3 mol of MnSO₄·H₂O; 0.68 mol of FeSO₄·H₂O; 10 L of water; 2 mol of oxalic acid dihydrate; 0.01 mol of VCl₂; and 0.01 mol of MgSO₄ | 1 mol of doped manganese oxalate particles obtained in step S1; 0.4975 mol of lithium carbonate; 0.0005 mol of Nb₂(SO₄)₅; aqueous phosphoric acid solution with a concentration of 85%, containing 0.999 mol of phosphoric acid; 0.001 mol of H₄SiO₄; 0.0005 mol of NH₄HBr₂; 0.005 mol of sucrose; and 20 L of water |
| Example 1-11 | Li_{0.998}Mg_{0.001}Mn_{0.65}Fe_{0.345}V_{0.005}P_{0.999}Si_{0.001}O_{3.999}Br_{0.001} | 1.3 mol of MnSO₄·H₂O; 0.69 mol of FeSO₄·H₂O; 10 L of water; 2 mol of oxalic acid dihydrate; and 0.01 mol of VCl₂ | 1 mol of doped manganese oxalate particles obtained in step S1; 0.499 mol of lithium carbonate; 0.001 mol of MgSO₄; aqueous phosphoric acid solution with a concentration of 85%, containing 0.999 mol of phosphoric acid; 0.001 mol of H₄SiO₄; 0.0005 mol of NH₄HBr₂; 0.005 mol of sucrose; and 20 L of water |
| Example 1-17 | Li_{0.997}Mg_{0.001}Mn_{0.68}Fe_{0.3}V_{0.02}P_{0.999}N_{0.001}O_{3.999}F_{0.001} | 1.36 mol of MnSO₄·H₂O; 0.6 mol of FeSO₄·H₂O; 10 L of water; 2 mol of oxalic acid dihydrate; and 0.04mol of VCl₂ | 1 mol of doped manganese oxalate particles obtained in step S1; 0.4985 mol of lithium carbonate; 0.001 mol of MgSO₄; aqueous phosphoric acid solution with a concentration of 85%, containing 0.999 mol of phosphoric acid; 0.001 mol of HNO₃; 0.0005 mol of NH₄HF₂; 0.005 mol of sucrose; and 20 L of water |
| Example 1-18 | Li_{0.997}Mg_{0.001}Mn_{0.58}Fe_{0.4}V_{0.02}P_{0.999}N_{0.001}O_{3.999}F_{0.001} | 1.16 mol of MnSO₄·H₂O; 0.8 mol of FeSO₄·H₂O; 10 L of water; 2 mol of oxalic acid dihydrate; and 0.04 mol of VC12 | 1 mol of doped manganese oxalate particles obtained in step S1; 0.4985 mol of lithium carbonate; 0.001 mol of MgSO₄; aqueous phosphoric acid solution with a concentration of 85%, containing 0.999 mol of phosphoric acid; 0.001 mol of HNO₃; 0.0005 mol of NH₄HF₂; 0.005 mol of sucrose; and 20 L of water |
| Example 1-19 | Li_{0.997}Mg_{0.001}Mn_{0.65}Fe_{0.3}V_{0.05}P_{0.999}N_{0.001}O_{3.999}F_{0.001} | 1.3 mol of MnSO₄·H₂O; 0.6 mol of FeSO₄·H₂O; 10 L of water; 2 mol of oxalic acid dihydrate; and 0.1 mol of VC12 | 1 mol of doped manganese oxalate particles obtained in step S1; 0.4985 mol of lithium carbonate; 0.001 mol of MgSO₄; aqueous phosphoric acid solution with a concentration of 85%, containing 0.999 mol of phosphoric acid; 0.001 mol of HNO₃; 0.0005 mol of NH₄HF₂; 0.005 mol of sucrose; and 20 L of water |
| Example 1-20 | Li_{0.988}Mg_{0.005}Mn_{0.6}Fe_{0.35}V_{0.05}P_{0.999}S_{0.001}O_{3.999}F_{0.001} | 1.2 mol of MnSO₄·H₂O; 0.7 mol of FeSO₄·H₂O; 10 L of water; 2 mol of oxalic acid dihydrate; and 0.1 mol of VCl₂ | 1 mol of doped manganese oxalate particles obtained in step S1; 0.494 mol of lithium carbonate; 0.005 mol of MgSO₄; aqueous phosphoric acid solution with a concentration of 85%, containing 0.999 mol of phosphoric acid; 0.001 mol of H₂SO₄; 0.0005 mol of NH₄HF₂; 0.005 mol of sucrose; and 20 L of water |
| Example 1-21 | Li_{0.984}Mg_{0.005}Mn_{0.6}Fe_{0.35}V_{0.05}P_{0.995}S_{0.005}O_{3.999}F_{0.001} | 1.2 mol of MnSO₄·H₂O; 0.7 mol of FeSO₄·H₂O; 10 L of water; 2 mol of oxalic acid dihydrate; and 0.1 mol of VCl₂ | 1 mol of doped manganese oxalate particles obtained in step S1; 0.467 mol of lithium carbonate; 0.005 mol of MgSO₄; aqueous phosphoric acid solution with a concentration of 85%, containing 0.171 mol of phosphoric acid; 0.005 mol of H₂SO₄; 0.0005 mol of NH₄HF₂; 0.005 mol of sucrose; and 20 L of water |
| Example 1-22 | Li_{0.984}Mg_{0.005}Mn_{0.6}Fe_{0.35}V_{0.05}P_{0.999}S_{0.001}O_{3.995}F_{0.005} | 1.2 mol of MnSO₄·H₂O; 0.7 mol of FeSO₄·H₂O; 10 L of water; 2 mol of oxalic acid dihydrate; and 0.1 mol of VCl₂ | 1 mol of doped manganese oxalate particles obtained in step S1; 0.492 mol of lithium carbonate; 0.005 mol of MgSO₄; aqueous phosphoric acid solution with a concentration of 85%, containing 0.999 mol of phosphoric acid; 0.001 mol of H₂SO₄; 0.0025 mol of NH₄HF₂; 0.005 mol of sucrose; and 20 L of water |
| Example 1-23 | Li_{0.984}Mg_{0.005}Mn_{0.65}Fe_{0.25}V_{0.05}Co_{0.05}P_{0.999}S_{0.001}03.995Fo.005 | 1.3 mol of MnSO₄·H₂O; 0.5 mol of FeSO₄·H₂O; 10 L of water; 2 mol of oxalic acid dihydrate; 0.1 mol of VCl₂; and 0.1 mol of CoSO₄ | 1 mol of doped manganese oxalate particles obtained in step S1; 0.492 mol of lithium carbonate; 0.005 mol of MgSO₄; aqueous phosphoric acid solution with a concentration of 85%, containing 0.999 mol of phosphoric acid; 0.001 mol of H₂SO₄; 0.0025 mol of NH₄HF₂; 0.005 mol of sucrose; and 20 L of water |
| Example 1-24 | Li_{0.984}Mg_{0.005}Mn_{0.65}Fe_{0.20}V_{0.05}Co_{0.10}P_{0.999}S_{0.001}O_{3.995}F_{0.005} | 1.3 mol of MnSO₄·H₂O; 0.4 mol of FeSO₄·H₂O; 10 L of water; 2 mol of oxalic acid dihydrate; 0.1 mol of VCl₂; and 0.2 mol of CoSO₄ | 1 mol of doped manganese oxalate particles obtained in step S1; 0.492 mol of lithium carbonate; 0.005 mol of MgSO₄; aqueous phosphoric acid solution with a concentration of 85%, containing 0.999 mol of phosphoric acid; 0.001 mol of H₂SO₄; 0.0025 mol of NH₄HF₂; 0.005 mol of sucrose; and 20 L of water |
| Example 1-25 | Li_{0.984}Mg_{0.005}Mn_{0.75}Fe_{0.05}V_{0.05}Co_{0.1 5}P_{0.999}S_{0.001}O_{3.995}F_{0.005} | 1.5 mol of MnSO₄·H₂O; 0.1 mol of FeSO₄·H₂O; 10 L of water; 2 mol of oxalic acid dihydrate; 0.1 mol of VCl₂; and 0.3 mol of CoSO₄ | 1 mol of doped manganese oxalate particles obtained in step S1; 0.492 mol of lithium carbonate; 0.005 mol of MgSO₄; aqueous phosphoric acid solution with a concentration of 85%, containing 0.999 mol of phosphoric acid; 0.001 mol of H₂SO₄; 0.0025 mol of NH₄HF₂; 0.005 mol of sucrose; and 20 L of water |
| Example 1-26 | Li_{0.984}Mg_{0.005}Mn_{0.65}Fe_{0.35}V_{0.05}Ni_{0.05}P_{0.999}S_{0.001}O_{3.995}F_{0.005} | 1.3 mol of MnSO₄·H₂O; 0.5 mol of FeSO₄·H₂O; 10 L of water; 2 mol of oxalic acid dihydrate; 0.1 mol of VCl₂; and 0.1 mol of NiSO₄ | 1 mol of doped manganese oxalate particles obtained in step S1; 0.492 mol of lithium carbonate; 0.005 mol of MgSO₄; aqueous phosphoric acid solution with a concentration of 85%, containing 0.999 mol of phosphoric acid; 0.001 mol of H₂SO₄; 0.0025 mol of NH₄HF₂; 0.005 mol of sucrose; and 20 L of water |
| Example 1-27 | Li_{0.984}Mg_{0.005}Mn_{0.75}Fe_{0.10}V_{0.05}Ni_{0.10}P_{0.999}S_{0.001}O_{3.995}F_{0.005} | 1.5 mol of MnSO₄·H₂O; 0.2 mol of FeSO₄·H₂O; 10 L of water; 2 mol of oxalic acid dihydrate; 0.1 mol of VCl₂; and 0.2 mol of NiSO₄ | 1 mol of doped manganese oxalate particles obtained in step S1; 0.492 mol of lithium carbonate; 0.005 mol of MgSO₄; aqueous phosphoric acid solution with a concentration of 85%, containing 0.999 mol of phosphoric acid; 0.001 mol of H₂SO₄; 0.0025 mol of NH₄HF₂; 0.005 mol of sucrose; and 20 L of water |
| Example 1-28 | Li_{0.984}Mg_{0.005}Mn_{0.7}Fe_{0.15}V_{0.05}Co_{0.10}P_{0.999}S_{0.001}O_{3.995}F_{0.005} | 1.4 mol of MnSO₄·H₂O; 0.3 mol of FeSO₄·H₂O; 10 L of water; 2 mol of oxalic acid dihydrate; 0.1 mol of VCl₂; and 0.2 mol of CoSO₄ | 1 mol of doped manganese oxalate particles obtained in step S1; 0.492 mol of lithium carbonate; 0.005 mol of MgSO₄; aqueous phosphoric acid solution with a concentration of 85%, containing 0.999 mol of phosphoric acid; 0.001 mol of H₂SO₄; 0.0025 mol of NH₄HF₂; 0.005 mol of sucrose; and 20 L of water |
| Example 1-29 | Li_{0.984}Mg_{0.005}Mn_{0.6}Fe_{0.25}V_{0.05}Co_{0.10}P_{0.999}S_{0.001}O_{3.995}F_{0.005} | 1.2 mol of MnSO₄·H₂O; 0.5 mol of FeSO₄·H₂O; 10 L of water; 2 mol of oxalic acid dihydrate; 0.1 mol of VCl₂; and 0.2 mol of CoSO₄ | 1 mol of doped manganese oxalate particles obtained in step S1; 0.497 mol of lithium carbonate; 0.005 mol of MgSO₄; aqueous phosphoric acid solution with a concentration of 85%, containing 0.999 mol of phosphoric acid; 0.001 mol of H₂SO₄; 0.0025 mol of NH₄HF₂; 0.005 mol of sucrose; and 20 L of water |
| Example 1-30 | Li_{0.984}Mg_{0.005}Mn_{0.5}Fe_{0.35}V_{0.05}Co_{0.10}P_{0.999}S_{0.001}O_{3.995}F_{0.005} | 1.0 mol of MnSO₄·H₂O; 0.7 mol of FeSO₄·H₂O; 10 L of water; 2 mol of oxalic acid dihydrate; 0.1 mol of VCl₂; and 0.2 mol of CoSO₄ | 1 mol of doped manganese oxalate particles obtained in step S1; 0.492 mol of lithium carbonate; 0.005 mol of MgSO₄; aqueous phosphoric acid solution with a concentration of 85%, containing 0.999 mol of phosphoric acid; 0.001 mol of H₂SO₄; 0.0025 mol of NH₄HF₂; 0.005 mol of sucrose; and 20 L of water |
| Example 1-31 | Li_{1.01}Mg_{0.005}Mn_{0.7}Fe_{0.15}V_{0.05}Co_{0.10}P_{0.9}Si_{0.1}O_{3.93}F_{0.08} | 1.4 mol of MnSO₄·H₂O; 0.3 mol of FeSO₄·H₂O; 10 L of water; 2 mol of oxalic acid dihydrate; 0.1 mol of VCl₂; and 0.2 mol of CoSO₄ | 1 mol of doped manganese oxalate particles obtained in step S1; 0.4825 mol of lithium carbonate; 0.005 mol of MgSO₄; aqueous phosphoric acid solution with a concentration of 85%, containing 0.9 mol of phosphoric acid; 0.1 mol of H₄SiO₄; 0.04 mol of NH₄HF₂; 0.005 mol of sucrose; and 20 L of water |
| Example 1-32 | Li_{0.97}Mg_{0.005}Mn_{0.7}Fe_{0.15}V_{0.05}Co_{0.10}P_{0.92}Si_{0.08}O_{3.9}F_{0.1} | 1.4 mol of MnSO₄·H₂O; 0.3 mol of FeSO₄·H₂O; 10 L of water; 2 mol of oxalic acid dihydrate; 0.1 mol of VCl₂; and 0.2 mol of CoSO₄ | 1 mol of doped manganese oxalate particles obtained in step S1; 0.485 mol of lithium carbonate; 0.005 mol of MgSO₄; aqueous phosphoric acid solution with a concentration of 85%, containing 0.92 mol of phosphoric acid; 0.08 mol of H₄SiO₄; 0.05 mol of NH₄HF₂; 0.005 mol of sucrose; and 20 L of water |
| Example 1-45 | Li_{0.9}Mg_{0.05}Mn_{0.6}Fe_{0.395}V_{0.005}P_{0.9}Si_{0.1}O_{3.9}F_{0.1} | 1.2 mol of MnSO₄·H₂O; 0.79 mol of FeSO₄·H₂O; 10 L of water; 2 mol of oxalic acid dihydrate; and 0.01 mol of VCl₂ | 1 mol of doped manganese oxalate particles obtained in step S1; 0.45 mol of lithium carbonate; 0.05 mol of MgSO₄; aqueous phosphoric acid solution with a concentration of 85%, containing 0.9 mol of phosphoric acid; 0.1 mol of H₄SiO₄; 0.05 mol of NH₄HF₂; 0.005 mol of sucrose; and 20 L of water |
| Example 1-46 | Li_{1.1}Mg_{0.001}Mn_{0.6}Fe_{0.395}V_{0.005}P_{0.9}Si_{0.1}O_{3.998}F_{0.003} | 1.2 mol of MnSO₄·H₂O; 0.79 mol of FeSO₄·H₂O; 10 L of water; 2 mol of oxalic acid dihydrate; and 0.01 mol of VCl₂ | 1 mol of doped manganese oxalate particles obtained in step S1; 0.55 mol of lithium carbonate; O.OOlmol of MgSO₄; aqueous phosphoric acid solution with a concentration of 85%, containing 0.9 mol of phosphoric acid; 0.1 mol of H₄SiO₄; 0.001 mol of NH₄HF₂; 0.005 mol of sucrose; and 20 L of water |
| Example 1-47 | Li_{0.9}Mg_{0.1}Mn_{0.6}Fe_{0.395}V_{0.005}P_{0.95}Si_{0.05}O_{3.95}F_{0.05} | 12 mol of MnSO₄·H₂O; 0.79 mol of FeSO₄·H₂O; 10 L of water; 2 mol of oxalic acid dihydrate; and 0.01 mol of VCl₂ | 1 mol of doped manganese oxalate particles obtained in step S1; 0.45 mol of lithium carbonate; 0.1 mol of MgSO₄; aqueous phosphoric acid solution with a concentration of 85%, containing 0.95 mol of phosphoric acid; 0.05 mol of H₄SiO₄; 0.025 mol of NH₄HF₂; 0.005 mol of sucrose; and 20 L of water |
| Example 1-48 | Li_{0.95}Mg_{0.05}Mn_{0.999}Fe_{0.001}P_{0.96}Si_{0.04}O_{3.99}F_{0.01} | 1.998 mol of MnSO₄·H₂O; 0.002 mol of FeSO₄·H₂O; 10 L of water; and 2 mol of oxalic acid dihydrate | 1 mol of doped manganese oxalate particles obtained in step S1; 0.475 mol of lithium carbonate; 0.05 mol of MgSO₄; aqueous phosphoric acid solution with a concentration of 85%, containing 0.96 mol of phosphoric acid; 0.04 mol of H₄SiO₄; 0.01 mol of NH₄HF₂; 0.005 mol of sucrose; and 20 L of water |
| Example 1-50 | Li_{0.95}Mg_{0.05}Mn_{0.99}Fe_{0.01}P_{0.96}Si_{0.04}0_{3.99}F_{0.01} | 1.98 mol of MnSO₄·H₂O; 0.02 mol of FeSO₄·H₂O; 10 L of water; and 2 mol of oxalic acid dihydrate | 1 mol of doped manganese oxalate particles obtained in step S1; 0.475 mol of lithium carbonate; 0.05 mol of MgSO₄; aqueous phosphoric acid solution with a concentration of 85%, containing 0.96 mol of phosphoric acid; 0.04 mol of H₄SiO₄; 0.01 mol of NH₄HF₂; 0.005 mol of sucrose; and 20 L of water |
| Example 1-53 | Li_{0.95}Mg_{0.05}Mn_{0.8}Fe_{0.2}P_{0.96}Si_{0.04}O_{3.99}F_{0.01} | 1.6 mol of MnSO₄·H₂O; 0.4 mol of FeSO₄·H₂O; 10 L of water; and 2 mol of oxalic acid dihydrate | 1 mol of doped manganese oxalate particles obtained in step S1; 0.475 mol of lithium carbonate; 0.05 mol of MgSO₄; aqueous phosphoric acid solution with a concentration of 85%, containing 0.96 mol of phosphoric acid; 0.04 mol of H₄SiO₄; 0.01 mol of NH₄HF₂; 0.005 mol of sucrose; and 20 L of water |
| Example 1-54 | Li_{0.5}Mg_{0.5}Mn_{0.5}Fe_{0.5}P_{0.96}Si_{0.04}O_{3.5}F_{0.5} | 1 mol of MnSO₄·H₂O; 1 mol of FeSO₄·H₂O; 10 L of water; and 2 mol of oxalic acid dihydrate | 1 mol of doped manganese oxalate particles obtained in step S1; 0.25 mol of lithium carbonate; 0.5 mol of MgSO₄; aqueous phosphoric acid solution with a concentration of 85%, containing 0.96 mol of phosphoric acid; 0.04 mol of H₄SiO₄; 0.5 mol of NH₄HF₂; 0.005 mol of sucrose; and 20 L of water |
| Example 1-55 | Li_{1.2}Mg_{0.001}Mn_{0.5}Fe_{0.5}P_{0.8}Si_{0.2}O_{3.999}F_{0.001} | 1 mol of MnSO₄·H₂O; 1 mol of FeSO₄·H₂O; 10 L of water; and 2 mol of oxalic acid dihydrate | 1 mol of doped manganese oxalate particles obtained in step S1; 0.6 mol of lithium carbonate; 0.001 mol of MgSO₄; aqueous phosphoric acid solution with a concentration of 85%, containing 0.8 mol of phosphoric acid; 0.2 mol of H₄SiO₄; 0.001 mol of NH₄HF₂; 0.005 mol of sucrose; and 20 L of water |
| Example 1-56 | Li_{0.95}Mg_{0.005}Mn_{0.5}Fe_{0.5}P_{0.96}Si_{0.04}O_{3.95}F_{0.05} | 1 mol of MnSO₄·H₂O; 1 mol of FeSO₄·H₂O; 10 L of water; and 2 mol of oxalic acid dihydrate | 1 mol of doped manganese oxalate particles obtained in step S1; 0.475 mol of lithium carbonate; 0.005 mol of MgSO₄; aqueous phosphoric acid solution with a concentration of 85%, containing 0.96 mol of phosphoric acid; 0.04 mol of H₄SiO₄; 0.05 mol of NH₄HF₂; 0.005 mol of sucrose; and 20 L of water |
| Example 1-57 | Li_{0.95}Mg_{0.05}Mn_{0.7}Fe_{0.3}P_{0.96}Si_{0.04}O_{3.99}F_{0.01} | 1.4 mol of MnSO₄·H₂O; 0.6 mol of FeSO₄·H₂O; 10 L of water; and 2 mol of oxalic acid dihydrate | 1 mol of doped manganese oxalate particles obtained in step S1; 0.475 mol of lithium carbonate; 0.05 mol of MgSO₄; aqueous phosphoric acid solution with a concentration of 85%, containing 0.96 mol of phosphoric acid; 0.04 mol of H₄SiO₄; 0.01 mol of NH₄HF₂; 0.005 mol of sucrose; and 20 L of water |
| Example 1-58 | Li_{0.95}Mg_{0.05}Mn_{0.6}Fe_{0.4}P_{0.96}Si_{0.04}O_{3.99}F_{0.01} | 1.2 mol of MnSO₄·H₂O; 0.8 mol of FeSO₄·H₂O; 10 L of water; and 2 mol of oxalic acid dihydrate | 1 mol of doped manganese oxalate particles obtained in step S1; 0.475 mol of lithium carbonate; 0.05 mol of MgSO₄; aqueous phosphoric acid solution with a concentration of 85%, containing 0.96 mol of phosphoric acid; 0.04 mol of H₄SiO₄; 0.01 mol of NH₄HF₂; 0.005 mol of sucrose; and 20 L of water |

**Table 2: Preparation of pyrophosphate powder only (step S3)**

| No. | Pyrophosphate powder | Step S3 |
|---|---|---|
| Examples 1-1 to 1-59 | Crystalline Li₂FeP₂O₇ | 4.77 g of lithium carbonate, 7.47 g of ferrous carbonate, 14.84 g of ammonium dihydrogen phosphate, and 1.3 g of oxalic acid dihydrate were dissolved in 50 ml of deionized water; a resulting mixture had a pH of 5 and was stirred for 2 hours for the reaction mixture to fully react; then the solution after reaction was warmed up to 80°C and maintained at that temperature for 4 hours to obtain a suspension containing Li₂FeP₂O₇; the suspension was filtered, washed with deionized water, and dried at 120°C for 4 h to obtain a powder; and the powder was sintered at 650°C in a nitrogen atmosphere for 8 hours, naturally cooled to room temperature, and then ground to obtain Li₂FeP₂O₇ powder. |
| Comparative examples 10 and 12 | Amorphous Li₂FeP₂O₇- | 9.52 g of lithium carbonate, 29.9 g of ferrous carbonate, 29.6 g of ammonium dihydrogen phosphate, and 32.5 g of oxalic acid dihydrate were dissolved in 50 ml of deionized water; a resulting mixture had a pH of 5 and was stirred for 2 hours for the reaction mixture to fully react; then the solution after reaction was warmed up to 80°C and maintained at that temperature for 4 hours to obtain a suspension containing Li₂FeP₂O₇; the suspension was filtered, washed with deionized water, and dried at 120°C for 4 h to obtain a powder; and the powder was sintered at 500°C in a nitrogen atmosphere for 4 hours, naturally cooled to room temperature, and then ground to control the crystallinity of Li₂FeP₂O₇ to be 5%. |

**Table 3: Preparation of suspension containing oxide and sucrose (step S4)**

| No. | First coating layer | | Second coating layer | Raw materials used in step S4 |
|---|---|---|---|---|
| Comparative example 11 | - | 3% Al₂O₃ | 1% carbon | 4.71 g of Al₂O₃; 3.73 g of sucrose; 150 ml of water |
| Comparative example 12 | Amorphous Li₂FeP₂O₇ | 3% Al₂O₃ | 1% carbon | |
| Examples 1-1 to 1-11, Examples 1-17 to 1-32, Examples 1-45 to 1-48, and Example 1-50 and 1-51 | Crystalline Li₂FeP₂O₇ | 3% Al₂O₃ | 1% carbon | |
| Example 1-12 | Crystalline Li₂FeP₂O₇ | 3% ZnO | 1% carbon | 4.71 g of ZnO; 3.73 g of sucrose; and 150 ml of water |
| Example 1-13 | Crystalline Li₂FeP₂O₇ | 3% ZrO₂ | 1% carbon | 4.71 g of ZrO₂; 3.73 g of sucrose; 150 ml of water |
| Example 1-14 | Crystalline Li₂FeP₂O₇ | 3% MgO | 1% carbon | 4.71 g of MgO; 3.73 g of sucrose; and 150 ml of water |
| Example 1-15 | Crystalline Li₂FeP₂O₇ | 3% WO₃ | 1% carbon | 4.71 g of WO₃; 3.73 g of sucrose; 150 ml of water |
| Example 1-16 | Crystalline Li₂FeP₂O₇ | 3% CuO | 1% carbon | 4.71 g of CuO; 3.73 g of sucrose; and 150 ml of water |
| Example 1-33 | Crystalline Li₂FeP₂O₇ | 2.4% Al₂O₃ | 1% carbon | 3.77 g of Al₂O₃; 3.73 g of sucrose; 150 ml of water |
| Example 1-34 | Crystalline Li₂FeP₂O₇ | 3.6% Al₂O₃ | 1% carbon | 5.65 g of Al₂O₃; 3.73 g of sucrose; 150 ml of water |
| Example 1-35 | Crystalline Li₂FeP₂O₇ | 4.2% Al₂O₃ | 1% carbon | 6.59 g of Al₂O₃; 3.73 g of sucrose; 150 ml of water |
| Example 1-36 | Crystalline Li₂FeP₂O₇ | 4.8% Al₂O₃ | 1% carbon | 7.54 g of Al₂O₃; 3.73 g of sucrose; 150 ml of water |
| Example 1-37 | Crystalline Li₂FeP₂O₇ | 3% Al₂O₃ | 2% carbon | 4.71 g of Al₂O₃; 7.46 g of sucrose; 150 ml of water |
| Example 1-38 | Crystalline Li₂FeP₂O₇ | 3% Al₂O₃ | 4% carbon | 4.71 g of Al₂O₃; 14.92 g of sucrose; 150 ml of water |
| Example 1-39 | Crystalline Li₂FeP₂O₇ | 3% Al₂O₃ | 5% carbon | 4.71 g of Al₂O₃; 18.65 g of sucrose; 150 ml of water |
| Example 1-40 | Crystalline Li₂FeP₂O₇ | 3% Al₂O₃ | 6% carbon | 4.71 g of Al₂O₃; 22.38 g of sucrose; 150 ml of water |
| Example 1-41 | Crystalline Li₂FeP₂O₇ | 2.5% Al₂O₃ | 2% carbon | 3.93 g of Al₂O₃; 7.46 g of sucrose; 150 ml of water |
| Example 1-42 | Crystalline Li₂FeP₂O₇ | 2% Al₂O₃ | 2% carbon | 3.14 g of Al₂O₃; 7.46 g of sucrose; 150 ml of water |
| Example 1-43 | Crystalline Li₂FeP₂O₇ | 1.5% Al₂O₃ | 2% carbon | 2.36 g of Al₂O₃; 7.46 g of sucrose; 150 ml of water |
| Example 1-44 | Crystalline Li₂FeP₂O₇ | 1% Al₂O₃ | 2% carbon | 1.57 g of Al₂O₃; 7.46 g of sucrose; 150 ml of water |
| Example 1-49 | Crystalline Li₂FeP₂O₇ | 3% V₂O₅ | 1% carbon | 4.71 g of V₂O₅; 3.73 g of sucrose; 150 ml of water |
| Example 1-52 | Crystalline Li₂FeP₂O₇ | 3% Al₂O₃ | 3% carbon | 4.71 g of Al₂O₃; 11.19 g of sucrose; 150 ml of water |
| Examples 1-53 to 1-59 | Crystalline Li₂FeP₂O₇ | 1% Al₂O₃ | 1% carbon | 1.57 g of Al₂O₃; 3.73 g of sucrose; 150 ml of water |

**Table 4: Preparation of two coating layers (step S5)**

| No. | Core chemical formula | First coating layer | | Second coating layer | Amount of core added | Amount of lithium iron pyrophosphate powder added | Amount of oxide in suspension for step S4 | Drying temperature (°C) | Drying time (h) | Sintering temperature (°C) | Sintering time (h) |
|---|---|---|---|---|---|---|---|---|---|---|---|
| Comparative example 10 | Same as Example 1-1 | 4% amorphous Li₂FeP₂O₇ | - | 1% carbon | 157.2 g | 6.28 g | - | 120 | 6 | 700 | 8 |
| Comparative example 11 | Same as Example 1-1 | - | 3% Al₂O₃ | 1% carbon | 157.2 g | - | 4.71 g | 120 | 6 | 700 | 8 |
| Comparative example 12 | Same as Example 1-1 | 1% amorphous Li₂FeP₂O₇ | 3% Al₂O₃ | 1% carbon | 157.2 g | 1.57 g | 4.71 g | 120 | 6 | 680 | 8 |
| Example 1-1 | Li_{0.994}Mo_{0.001}Mn_{0.65}Fe_{0.35}P_{0.999} Si_{0.001}O_{3.999}F_{0.001} | 1% crystalline Li₂FeP₂O₇ | 3% Al₂O₃ | 1% carbon | 157.2 g | 1.57 g | 4.71 g | 120 | 6 | 750 | 8 |
| Example 1-2 | Li_{0.977}Mg_{0.001}Mn_{0.65}Fe_{0.34}Ti_{0.01} P_{0.999}N_{0.001}O_{3.999}F_{0.001} | 1% crystalline Li₂FeP₂O₇ | 3% Al₂O₃ | 1% carbon | 157.1 g | 1.57 g | 4.71 g | 120 | 6 | 750 | 8 |
| Example 1-3 | Li_{0.992}W_{0.001}Mn_{0.65}Fe_{0.35}P_{0.999}S _{0.001}O_{3.999}F_{0.001} | 1% crystalline Li₂FeP₂O₇ | 3% Al₂O₃ | 1% carbon | 157.3 g | 1.57 g | 4.71 g | 120 | 6 | 750 | 8 |
| Example 1-4 | Li_{0.997}Al_{0.001}Mn_{0.65}Fe_{0.35}P_{0.999}S i_{0.001}O_{3.999}Cl_{0.001} | 1% crystalline Li₂FeP₂O₇ | 3% Al₂O₃ | 1% carbon | 157.2 g | 1.57 g | 4.71 g | 120 | 6 | 750 | 8 |
| Example 1-5 | Li_{0.993}Nb_{0.001}Mn_{0.65}Fe_{0.345}V_{0.00 5}P_{0.999}S_{0.001}O_{3.999}F_{0.001} | 1% crystalline Li₂FeP₂O₇ | 3% Al₂O₃ | 1% carbon | 157.2 g | 1.57 g | 4.71 g | 120 | 6 | 750 | 8 |
| Example 1-6 | Li_{0.993}Nb_{0.001}Mn_{0.65}Fe_{0.34}V_{0.005} Mg_{0.005}P_{0.999}S_{0.001}O_{3.999}F_{0.001} | 1% crystalline Li₂FeP₂O₇ | 3% Al₂O₃ | 1% carbon | 157.0 g | 1.57 g | 4.71 g | 120 | 6 | 750 | 8 |
| Example 1-7 | Li_{0.993}Nb_{0.001}Mn_{0.65}Fe_{0.34}V_{0.005} Co_{0.005}P_{0.999}S_{0.001}O_{3.999}F_{0.001} | 1% crystalline Li₂FeP₂O₇ | 3% Al₂O₃ | 1% carbon | 157.2 g | 1.57 g | 4.71 g | 120 | 6 | 750 | 8 |
| Example 1-8 | Li_{0.993}Nb_{0.001}Mn_{0.65}Fe_{0.34}V_{0.005} Ni_{0.005}P_{0.999}S_{0.001}O_{3.999}F_{0.001} | 1% crystalline Li₂FeP₂O₇ | 3% Al₂O₃ | 1% carbon | 157.2 g | 1.57 g | 4.71 g | 120 | 6 | 750 | 8 |
| Example 1-9 | Li_{0.991}Nb_{0.001}Mn_{0.65}Fe_{0.349}Ti_{0.00 1}P_{0.999}S_{0.001}O_{3.999}Cl_{0.001} | 1% crystalline Li₂FeP₂O₇ | 3% Al₂O₃ | 1% carbon | 157.2 g | 1.57 g | 4.71 g | 120 | 6 | 750 | 8 |
| Example 1-10 | Li_{0.995}Nb_{0.001}Mn_{0.65}Fe_{0.34}V_{0.005} Mg_{0.005}P_{0.999}Si_{0.001}O_{3.999}Br_{0.001} | 1% crystalline Li₂FeP₂O₇ | 3% Al₂O₃ | 1% carbon | 157.1 g | 1.57 g | 4.71 g | 120 | 6 | 750 | 8 |
| Example 1-11 | Li_{0.998}Mg_{0.001}Mn_{0.65}Fe_{0.345}V_{0.00 5}P_{0.999}Si_{0.001}O_{3.999}Br_{0.001} | 1% crystalline Li₂FeP₂O₇ | 3% Al₂O₃ | 1% carbon | 157.2 g | 1.57 g | 4.71 g | 120 | 6 | 750 | 8 |
| Example 1-12 | Same as Example 1-1 | 1% crystalline Li₂FeP₂O₇ | 3% ZnO | 1% carbon | 157.2 g | 1.57 g | 4.71 g | 120 | 6 | 720 | 8 |
| Example 1-13 | Same as Example 1-1 | 1% crystalline Li₂FeP₂O₇ | 3% ZrO₂ | 1% carbon | 157.2 g | 1.57 g | 4.71 g | 120 | 6 | 780 | 8 |
| Example 1-14 | Same as Example 1-1 | 1% crystalline Li₂FeP₂O₇ | 3% MgO | 1% carbon | 157.2 g | 1.57 g | 4.71 g | 120 | 6 | 700 | 8 |
| Example 1-15 | Same as Example 1-1 | 1% crystalline Li₂FeP₂O₇ | 3% WO₃ | 1% carbon | 157.2 g | 1.57 g | 4.71 g | 120 | 6 | 790 | 8 |
| Example 1-16 | Same as Example 1-1 | 1% crystalline Li₂FeP₂O₇ | 3% Cu0 | 1% carbon | 157.2 g | 1.57 g | 4.71 g | 120 | 6 | 740 | 8 |
| Example 1-17 | Li_{0.997}Mg_{0.001}Mn_{0.68}Fe_{0.3}V_{0.02}P _{0.999}N_{0.001}O_{3.999}F_{0.001} | 1% crystalline Li₂FeP₂O₇ | 3% Al₂O₃ | 1% carbon | 157.0 g | 1.57 g | 4.71 g | 120 | 6 | 750 | 8 |
| Example 1-18 | Li_{0.997}Mg_{0.001}Mn_{0.58}Fe_{0.4}V_{0.02}P _{0.999}N_{0.001}O_{3.999}F_{0.001} | 1% crystalline Li₂FeP₂O₇ | 3% Al₂O₃ | 1% carbon | 157.1 g | 1.57 g | 4.71 g | 120 | 6 | 750 | 8 |
| Example 1-19 | Li_{0.997}Mg_{0.001}Mn_{0.65}Fe_{0.3}V_{0.05}P _{0.999}N_{0.001}O_{3.999}F_{0.001} | 1% crystalline Li₂FeP₂O₇ | 3% Al₂O₃ | 1% carbon | 156.9 g | 1.57 g | 4.71 g | 120 | 6 | 750 | 8 |
| Example 1-20 | Li_{0.988}Mg_{0.005}Mn_{0.6}Fe_{0.35}V_{0.05}P _{0.999}S_{0.001}O_{3.999}F_{0.001} | 1% crystalline Li₂FeP₂O₇ | 3% Al₂O₃ | 1% carbon | 157.0 g | 1.57 g | 4.71 g | 120 | 6 | 750 | 8 |
| Example 1-21 | Li_{0.984}Mg_{0.005}Mn_{0.6}Fe_{0.35}V_{0.05}P _{0.995}S_{0.005}O_{3.999}F_{0.001} | 1% crystalline Li₂FeP₂O₇ | 3% Al₂O₃ | 1% carbon | 157.0 g | 1.57 g | 4.71 g | 120 | 6 | 750 | 8 |
| Example 1-22 | Li_{0.984}Mg_{0.005}Mn_{0.6}Fe_{0.35}V_{0.05}P _{0.999}S_{0.001}O_{3.995}F_{0.005} | 1% crystalline Li₂FeP₂O₇ | 3% Al₂O₃ | 1% carbon | 157.0 g | 1.57 g | 4.71 g | 120 | 6 | 750 | 8 |
| Example 1-23 | Li_{0.984}Mg_{0.005}Mn_{0.65}Fe_{0.25}V_{0.05} Co_{0.05}P_{0.999}S_{0.001}O_{3.995}F_{0.005} | 1% crystalline Li₂FeP₂O₇ | 3% Al₂O₃ | 1% carbon | 157.1 g | 1.57 g | 4.71 g | 120 | 6 | 750 | 8 |
| Example 1-24 | Li_{0.984}Mg_{0.005}Mn_{0.65}Fe_{0.20}V_{0.05} Co_{0.10}P_{0.999}S_{0.001} O_{3.995}F_{0.005} | 1% crystalline Li₂FeP₂O₇ | 3% Al₂O₃ | 1% carbon | 157.2 g | 1.57 g | 4.71 g | 120 | 6 | 750 | 8 |
| Example 1-25 | Li_{0.984}Mg_{0.005}Mn_{0.75}Fe_{0.05}V_{0.05} Co_{0.15}P_{0.999}S_{0.001}O_{3.995}F_{0.005} | 1% crystalline Li₂FeP₂O₇ | 3% Al₂O₃ | 1% carbon | 157.3 g | 1.57 g | 4.71 g | 120 | 6 | 750 | 8 |
| Example 1-26 | Li_{0.984}Mg_{0.005}Mn_{0.65}Fe_{0.25}V_{0.05} Ni_{0.05}P_{0.999}S_{0.001}O_{3.995}F_{0.005} | 1% crystalline Li₂FeP₂O₇ | 3% Al₂O₃ | 1% carbon | 157.1 g | 1.57 g | 4.71 g | 120 | 6 | 750 | 8 |
| Example 1-27 | Li_{0.984}Mg_{0.005}Mn_{0.75}Fe_{0.10}V_{0.05} Ni_{0.10}P_{0.999}S_{0.001}O_{3.995}F_{0.005} | 1% crystalline Li₂FeP₂O₇ | 3% Al₂O₃ | 1% carbon | 157.1 g | 1.57 g | 4.71 g | 120 | 6 | 750 | 8 |
| Example 1-28 | Li_{0.984}Mg_{0.005}Mn_{0.7}Fe_{0.15}V_{0.05}C o_{0.10}P_{0.999}S_{0.001}O_{3.995}F_{0.005} | 1% crystalline Li₂FeP₂O₇ | 3% Al₂O₃ | 1% carbon | 157.1 g | 1.57 g | 4.71 g | 120 | 6 | 750 | 8 |
| Example 1-29 | Li_{0.984}Mg_{0.005}Mn_{0.6}Fe_{0.25}V_{0.05}C o_{0.10}P_{0.999}S_{0.001} O_{3.995}F_{0.005} | 1% crystalline Li₂FeP₂O₇ | 3% Al₂O₃ | 1% carbon | 157.3 g | 1.57 g | 4.71 g | 120 | 6 | 750 | 8 |
| Example 1-30 | Li_{0.984}Mg_{0.005}Mn_{0.5}Fe_{0.35}V_{0.05}C o_{0.10}P_{0.999}S_{0.001}O_{3.995}F_{0.005} | 1% crystalline Li₂FeP₂O₇ | 3% Al₂O₃ | 1% carbon | 157.4 g | 1.57 g | 4.71 g | 120 | 6 | 750 | 8 |
| Example 1-31 | Li_{1.01}Mg_{0.005}Mn_{0.7}Fe_{0.15} V_{0.05}C o_{0.10}P_{0.9}Si_{0.1}O_{3.92}F_{0.08} | 1% crystalline Li₂FeP₂O₇ | 3% Al₂O₃ | 1% carbon | 157.4 g | 1.57 g | 4.71 g | 120 | 6 | 750 | 8 |
| Example 1-32 | Li_{0.97}Mg_{0.005}Mn_{0.7}Fe_{0.15}V_{0.05}C o_{0.10}P_{0.92}Si_{0.08}O_{3.9}F₀₁ | 1% crystalline Li₂FeP₂O₇ | 3% Al₂O₃ | 1% carbon | 157.2 g | 1.57 g | 4.71 g | 120 | 6 | 750 | 8 |
| Example 1-33 | Same as Example 1-1 | 0.8% crystalline Li₂FeP₂O₇ | 2.4% Al₂O₃ | 1% carbon | 157.2 g | 1.26 g | 3.77 g | 120 | 6 | 750 | 8 |
| Example 1-34 | Same as Example 1-1 | 1.2% crystalline Li₂FeP₂O₇ | 3.6% Al₂O₃ | 1% carbon | 157.2 g | 1.89 g | 5.66 g | 120 | 6 | 750 | 8 |
| Example 1-35 | Same as Example 1-1 | 1.4% crystalline Li₂FeP₂O₇ | 4.2% Al₂O₃ | 1% carbon | 157.2 g | 2.20 g | 6.60 g | 120 | 6 | 750 | 8 |
| Example 1-36 | Same as Example 1-1 | 1.6% crystalline Li₂FeP₂O₇ | 4.8% Al₂O₃ | 1% carbon | 157.2 g | 2.52 g | 7.55 g | 120 | 6 | 750 | 8 |
| Example 1-37 | Same as Example 1-1 | 1% crystalline Li₂FeP₂O₇ | 3% Al₂O₃ | 2% carbon | 157.2 g | 1.57 g | 4.71 g | 120 | 6 | 750 | 8 |
| Example 1-38 | Same as Example 1-1 | 1% crystalline Li₂FeP₂O₇ | 3% Al₂O₃ | 4% carbon | 157.2 g | 1.57 g | 4.71 g | 120 | 6 | 750 | 8 |
| Example 1-39 | Same as Example 1-1 | 1% crystalline Li₂FeP₂O₇ | 3% Al₂O₃ | 5% carbon | 157.2 g | 1.57 g | 4.71 g | 120 | 6 | 750 | 8 |
| Example 1-40 | Same as Example 1-1 | 1% crystalline Li₂FeP₂O₇ | 3% Al₂O₃ | 6% carbon | 157.2 g | 1.57 g | 4.71 g | 120 | 6 | 750 | 8 |
| Example 1-41 | Same as Example 1-1 | 1.5% crystalline Li₂FeP₂O₇ | 2.5% Al₂O₃ | 2% carbon | 157.2 g | 1.57 g | 3.93 g | 120 | 6 | 750 | 8 |
| Example 1-42 | Same as Example 1-1 | 2% crystalline Li₂FeP₂O₇ | 2% Al₂O₃ | 2% carbon | 157.2 g | 1.57 g | 3.14 g | 120 | 6 | 750 | 8 |
| Example 1-43 | Same as Example 1-1 | 2.5% crystalline Li₂FeP₂O₇ | 1.5% Al₂O₃ | 2% carbon | 157.2 g | 1.57 g | 2.36 g | 120 | 6 | 750 | 8 |
| Example 1-44 | Same as Example 1-1 | 3% crystalline Li₂FeP₂O₇ | 1% Al₂O₃ | 2% carbon | 157.2 g | 1.57 g | 1.57 g | 120 | 6 | 750 | 8 |
| Example 1-45 | Li_{0.9}Mg_{0.05}Mn_{0.6}Fe_{0.395}V_{0.005}P_{0. 9}Si_{0.1}O_{3.9}F_{0.1} | 1% crystalline Li₂FeP₂O₇ | 3% Al₂O₃ | 1% carbon | 155.8 g | 1.56 g | 4.67 g | 120 | 6 | 750 | 8 |
| Example 1-46 | Li_{1.1}Mg_{0.001}Mn_{0.6}Fe_{0.395}V_{0.005}P _{0.9}Si_{0.1}O_{3.998}F_{0.002} | 1% crystalline Li₂FeP₂O₇ | 3% Al₂O₃ | 1% carbon | 156.8 g | 1.57 g | 4.70 g | 120 | 6 | 750 | 8 |
| Example 1-47 | Li_{0.9}Mg_{0.1} Mn_{0.6}Fe_{0.395}V_{0.005}P_{0.9 5}Si_{0.05}O_{3.95}F_{0.05} | 1% crystalline Li₂FeP₂O₇ | 3% Al₂O₃ | 1% carbon | 158.9 g | 1.59 g | 4.78 g | 120 | 6 | 750 | 8 |
| Example 1-48 | Li_{0.95}Mg_{0.05}Mn_{0.999}Fe_{0.001}P_{0.96}S i_{0.04}O_{3.99}F_{0.01} | 1% crystalline Li₂FeP₂O₇ | 3% Al₂O₃ | 1% carbon | 157.6 g | 1.58 g | 4.73 g | 120 | 6 | 750 | 8 |
| Example 1-49 | Same as Example 1-1 | 1% crystalline Li₂FeP₂O₇ | 3% V₂O₅ | 1% carbon | 157.2 g | 1.57 g | 4.71 g | 120 | 6 | 750 | 8 |
| Example 1-50 | Li_{0.95}Mg_{0.05}Mn_{0.99}Fe_{0.01}P_{0.96}Si_{0 .04}O_{3.99}F_{0.01} | 1% crystalline Li₂FeP₂O₇ | 3% Al₂O₃ | 1% carbon | 157.6 g | 1.57 g | 4.71 g | 120 | 6 | 750 | 8 |
| Example 1-51 | Same as Example 1-1 | 4% crystalline Li₂FeP₂O₇ | 3% Al₂O₃ | 1% carbon | 154.6 | 6.28 g | 4.73 g | 120 | 6 | 750 | 8 |
| Example 1-52 | Same as Example 1-1 | 1% crystalline Li₂FeP₂O₇ | 3% Al₂O₃ | 3% carbon | 155.2 | 1.57 g | 4.71 | 120 | 6 | 750 | 8 |
| Example 1-53 | Li_{0.95}Mg_{0.05}Mn_{0.8}Fe_{0.2}P_{0.96}Si_{0.0 4}O_{3.99}F_{0.01} | 3% crystalline Li₂FeP₂O₇ | 1% Al₂O₃ | 1% carbon | 157.3 | 4.73 | 1.57 | 120 | 6 | 750 | 8 |
| Example 1-54 | Li_{0.5}Mg_{0.5}Mn_{0.5}Fe_{0.5}P_{0.96}Si_{0.04} Os.sFo.s | 3% crystalline Li₂FeP₂O₇ | 1% Al₂O₃ | 1% carbon | 166 | 4.73 | 1.57 | 120 | 6 | 750 | 8 |
| Example 1-55 | Li_{1.2}Mg_{0.001}Mn_{0.5}Fe_{0.5}P_{0.8}Si_{0.2} O_{3.999}F_{0.001} | 3% crystalline Li₂FeP₂O₇ | 1% Al₂O₃ | 1% carbon | 157.8 | 4.73 | 1.57 | 120 | 6 | 750 | 8 |
| Example 1-56 | Li_{0.95}Mg_{0.005}Mn_{0.5}Fe_{0.5}P_{0.96}Si_{0. 04}O_{3.95}F_{0.05} | 3% crystalline Li₂FeP₂O₇ | 1% Al₂O₃ | 1% carbon | 155.68 | 4.73 | 1.57 | 120 | 6 | 750 | 8 |
| Example 1-57 | Li_{0.95}Mg_{0.05}Mn_{0.7}Fe_{0.3}P_{0.96}Si_{0.0 4}O_{3.99}F_{0.01} | 3% crystalline Li₂FeP₂O₇ | 1% Al₂O₃ | 1% carbon | 156.7 | 4.73 | 1.57 | 120 | 6 | 750 | 8 |
| Example 1-58 | Li_{0.95}Mg_{0.05}Mn_{0.6}Fe_{0.4}P_{0.96}Si_{0.0 4}O_{3.99}F_{0.01} | 3% crystalline Li₂FeP₂O₇ | 1% Al₂O₃ | 1% carbon | 156.7 | 4.73 | 1.57 | 120 | 6 | 750 | 8 |
| Example 1-59 | Same as Example 1-1 | 3% crystalline Li₂FeP₂O₇ | 1% Al₂O₃ | 1% carbon | 156.7 | 4.73 | 1.57 | 120 | 6 | 600 | 8 |

### Example 2-1

Conditions were the same as those in Example 1-1, except that in step S3 of preparation of lithium iron pyrophosphate (Li₂FeP₂O₇) powder, the sintering temperature in the powder sintering step was 550°C and the sintering time was 1 h to control the crystallinity of Li₂FeP₂O₇ to be 30%.

### Example 2-2

Conditions were the same as those in Example 1-1, except that in step S3 of preparation of lithium iron pyrophosphate (Li₂FeP₂O₇) powder, the sintering temperature in the powder sintering step was 550°C and the sintering time was 2 h to control the crystallinity of Li₂FeP₂O₇ to be 50%.

### Example 2-3

Conditions were the same as those in Example 1-1, except that in step S3 of preparation of lithium iron pyrophosphate (Li₂FeP₂O₇) powder, the sintering temperature in the powder sintering step was 600°C and the sintering time was 3 h to control the crystallinity of Li₂FeP₂O₇ to be 70%.

### Example 2-4

Conditions were the same as those in Example 1-1, except that in step S3 of preparation of lithium iron pyrophosphate (Li₂FeP₂O₇) powder, the sintering temperature in the powder sintering step was 500°C to control the crystallinity of Li₂FeP₂O₇ to be 10%.

### Preparation of positive electrode plate

The prepared lithium manganese phosphate positive electrode active material coated with two layers, the conductive agent acetylene black, and the binder polyvinylidene fluoride (PVDF) were added at a weight ratio of 92:2.5:5.5 to N-methylpyrrolidone (NMP), stirred and mixed to uniformity to obtain a positive electrode slurry. Then the positive electrode slurry was uniformly applied on an aluminum foil at 0.280 g/1540.25 mm², followed by drying, cold pressing, and slitting, to obtain a positive electrode plate.

### Preparation of negative electrode plate

The negative electrode active material artificial graphite, the conductive agent super-conductive carbon black (Super-P), the binder styrene butadiene rubber (SBR), and the thickener sodium carboxymethyl cellulose (CMC-Na) were dissolved at a mass ratio of 95%: 1.5%: 1.8%: 1.7% in deionized water, fully stirred, and mixed to uniformity to obtain a negative electrode slurry with a viscosity of 3000 mPa's and a solid content of 52%. The negative electrode slurry was applied on a 6-µm negative electrode current collector copper foil, followed by baking at 100°C for drying for 4 hours and roll pressing, to obtain a negative electrode plate with a compacted density of 1.75 g/cm³.

### Separator

A polypropylene film was used.

### Preparation of electrolyte

Ethylene carbonate, dimethyl carbonate, and 1,2-propanediol carbonate were mixed at a volume ratio of 1:1:1, and then LiPF₆ was dissolved to uniformity in the solution to obtain an electrolyte. In the electrolyte, a concentration of LiPF₆ was 1 mol/L.

### Preparation of full cell

The positive electrode plate, separator, and negative electrode plate obtained above were stacked in order, so that the separator was placed between the positive and negative electrodes for separation, and winding was performed to obtain a jelly roll. The jelly roll was placed in an outer package, the electrolyte was injected, and the outer package was sealed to obtain a full cell (also referred to as "full battery" hereinafter).

### Preparation of button cell

The prepared positive electrode active material, PVDF, and acetylene black were added at a weight ratio of 90:5:5 to NMP and stirred in a drying room to obtain a slurry. The slurry was applied onto an aluminum foil, followed by drying and cold pressing, to obtain a positive electrode plate. The coating amount was 0.2 g/cm² and the compacted density was 2.0 g/cm³.

A lithium sheet used as the negative electrode, a solution containing ethylene carbonate (EC) + diethyl carbonate (DEC) + dimethyl carbonate (DMC) at a volume ratio of 1:1:1 and 1 mol/L LiPF₆ used as the electrolyte, and the prepared positive electrode plate were assembled together in a button cell box to form a button cell (also referred to as "button battery" hereafter).

### Property test for positive electrode active material

### 1. Determination of chemical formula of core and composition of different coating layers

An aberration corrected scanning transmission electron microscope (ACSTEM) was used for high spatial resolution characterization of the internal microstructure and surface structure of the positive electrode active material, and the chemical formula of the core and the composition of the first and second coating layers of the positive electrode active material were obtained in combination with three-dimensional reconstruction techniques.

### 2. Test for initial gram capacity of button cell

The prepared button cell was charged to 4.3 V at 0.1C under a voltage of 2.5 V-4.3 V, then charged at constant voltage of 4.3 V to a current less than or equal to 0.05 mA, left standing for 5 min, and then discharged to 2.0 V at 0.1C, and a discharge capacity at this moment was an initial gram capacity and recorded as D0.

### 3. Test for average discharge voltage (V) of button cell

The prepared button cell was left standing for 5 min at a constant temperature of 25°C, discharged to 2.5 V at 0.1C, left standing for 5 min, charged to 4.3 V at 0.1C, and then charged at a constant voltage of 4.3 V to a current less than or equal to 0.05 mA. After left standing for 5 min, the button cell was discharged to 2.5 V at 0.1C. A discharge capacity at this moment was recorded as an initial gram capacity, denoted as DO, discharge energy was recorded as initial energy, denoted as E0, and the average discharge voltage V of the button cell was EO/DO.

### 4. Swelling test for full cell at 60°C

The prepared full cells in 100% state of charge (SOC) were stored at 60°C.The open circuit voltage (OCV) and alternating current internal resistance (IMP) of the cells were measured before, during, and after storage to monitor the SOCs and the volumes of the cells were measured. The full cells were taken out after every 48 h of storage and left standing for 1 h. Then the open circuit voltage (OCV) and internal resistance (IMP) were measured, and the cell volumes were measured by a drainage method after the cells were cooled to room temperature. In the drainage method, first a scale that automatically performs unit conversion on dial data was used to separately measure a weight of the cell, denoted as Fi, then the cell was completely placed into deionized water (density known to be 1 g/cm³), and the weight of the cell at this moment was measured as F₂. The buoyant force experienced by the cell, denoted as F_{buoyancy}, was calculated as F₁-F₂. Then, according to Archimedes' principle, F_{buoyancy} = ρ × g × *V_{displacement},* the volume V of the cell could be calculated as V=(F₁-F₂)/(ρ × g).

It can be learned from the OCV and IMP test results that the cells of all the examples always maintained an SOC of 99% or more throughout the storage test.

After 30 days of storage, the cell volumes were measured and the percentage increases in the cell volumes after storage relative to the cell volumes before storage were calculated.

In addition, the residual capacity was measured for the cells. The full cell was charged to 4.3 V at 1C under a voltage of 2.5 V-4.3 V, then charged at constant voltage of 4.3 V to a current less than or equal to 0.05 mA, left standing for 5 min, and the charge capacity at this moment was recorded as the residual capacity of the cell.

### 5. Test for cycling performance of full cell at 45°C

The prepared full cell was charged to 4.3 V at 1C under a voltage of 2.5 V-4.3 V at a constant temperature of 45°C, and then charged at constant voltage of 4.3 V to a current less than or equal to 0.05 mA. After left standing for 5 min, the full cell was discharged to 2.5 V at 1C. The discharge capacity at this moment was recorded as D0. The charge/discharge cycle was repeated until the discharge capacity was reduced to 80% of D0. The number of cycles the cell had undergone at this moment was recorded.

### 6. Test for lattice change rate

At a constant temperature of 25°C, the prepared positive electrode active material samples were placed in an XRD instrument (model: Bruker D8 Discover), and the samples were tested at 1°/min. The test data were organized and analyzed, and the lattice constants a0, bO, c0, and v0 (where a0, bO, and cO represent the lengths of faces of the unit cell, and vO denotes the volume of the unit cell, which can be obtained directly from XRD refinement results) at this moment were calculated with reference to standard PDF cards.

The positive electrode active material sample was used for preparation of a button cell using the foregoing preparation method of button cell, and the button cell was charged at a small rate of 0.05C until the current was reduced to 0.01C. The positive electrode plate in the button cell was then taken and placed in dimethyl carbonate (DMC) for 8 hours, dried, and scraped for powder, and particles with a particle size less than 500 nm were sifted out from the powder. Samples were taken and subjected to the same way as the fresh samples under test above to calculate their unit cell volumes vl, and (v0-v1)/v0×100% was taken as their lattice change rates (unit cell volume change rate) before and after complete lithium deintercalation and intercalation to be listed in the table.

### 7. Test for Li/Mn antisite defect concentration

The Li/Mn antisite defect concentration was obtained by comparing the XRD results in the "lattice change rate measurement method" with the standard crystal PDF (Powder Diffraction File) cards. Specifically, the XRD results in the "lattice change rate measurement method" were imported into the general structural analysis system (GSAS) software for automatic obtaining of refinement results that contain the occupancy of the different atoms, and the Li/Mn antisite defect concentration was obtained by reading the refinement results.

### 8. Test for transition metal dissolution

The full cell that was cycled at 45°C until the capacity decayed to 80% was discharged to a cut-off voltage of 2.0 V at a rate of 0.1C. The cell was then disassembled, the negative electrode plate was removed, and 30 discs with a unit area (1540.25 mm²) were randomly taken on the negative electrode plate and tested by using Agilent ICP-OES730 for inductively coupled plasma atomic emission spectroscopy (ICP). The amounts of Fe (if the Mn site of the positive electrode active material was doped with Fe) and Mn were calculated from the ICP results, so as to calculate the amount of Mn (and Fe doped at the Mn site) dissolved after the cycling. The test standard was based on EPA-6010D-2014.

### 9. Test for valence state of surface oxygen

5 g of the prepared positive electrode active material sample was taken and used for preparation of a button cell according to the preparation method of button cell described above. The button cell was charged at a small rate of 0.05C until the current was reduced to 0.01C. The positive electrode plate in the button cell was then taken and placed in dimethyl carbonate (DMC) for 8 hours, dried, and scraped for powder, and particles with a particle size less than 500 nm were sifted out from the powder. The obtained particles were measured by using electron energy loss spectroscopy (EELS; the model of the instrument used was Tales F200S) to obtain energy loss near edge structures (ELNES) that reflect the density of states and energy level distribution of elements. Based on the density of states and energy level distribution, the number of occupying electrons was calculated by integrating the data of the valence band density of states to deduce the valence state of surface oxygen after charging.

### 10. Compacted density measurement

5 g of the prepared positive electrode active material powder was taken and put in a special mold for compaction (CARVER mold, model 13 mm, USA), and then the mold was placed on a compacted density tester. A pressure of 3T was applied, the thickness of the powder under the pressure (the thickness after pressure relief, with the container used for testing having an area of 1540.25 mm²) was read on the device, and the compacted density was calculated by ρ=m/v.

### 11. Determination of crystallinity of pyrophosphate and phosphate by X-ray diffraction method

5 g of the prepared positive electrode active material powder was taken, and a total scattering intensity was measured by X-ray, where the total scattering intensity was a sum of scattering intensities of substances in the entire space and was only related to the intensity of the primary rays, the chemical structure, a total number of electrons participating in the diffraction, that is, the mass, and not to the order state of the sample. Then, crystalline scattering was separated from non-crystalline scattering in a diffraction pattern, where the crystallinity is a ratio of a scattering intensity of the crystalline part to the total scattering intensity.

### 12. Interplanar spacing and included angle

1 g of each prepared positive electrode active material powder was taken and placed into a 50 mL test tube, 10 mL of alcohol with a mass fraction of 75% was injected into the test tube, and the substances were then fully stirred and dispersed for 30 minutes. Then an appropriate amount of the solution was taken with a clean disposable plastic pipette and added dropwise on a 300 mesh copper grid. At this moment, part of the powder would remain on the copper grid. The copper grid with the sample was transferred to the TEM (Tales F200s G2) sample cavity for testing, and original TEM test images were obtained and saved in an original image format (xx.dm3).

The original image obtained from the TEM test was opened in DigitalMicrograph software, and Fourier transform was performed (done automatically by the software upon clicking) to obtain a diffraction pattern. A distance from the diffraction spot to the center of the diffraction pattern was measured to obtain the interplanar spacing, and the included angle was calculated according to the Bragg equation.

The results of the foregoing tests are shown in Tables 5-9.

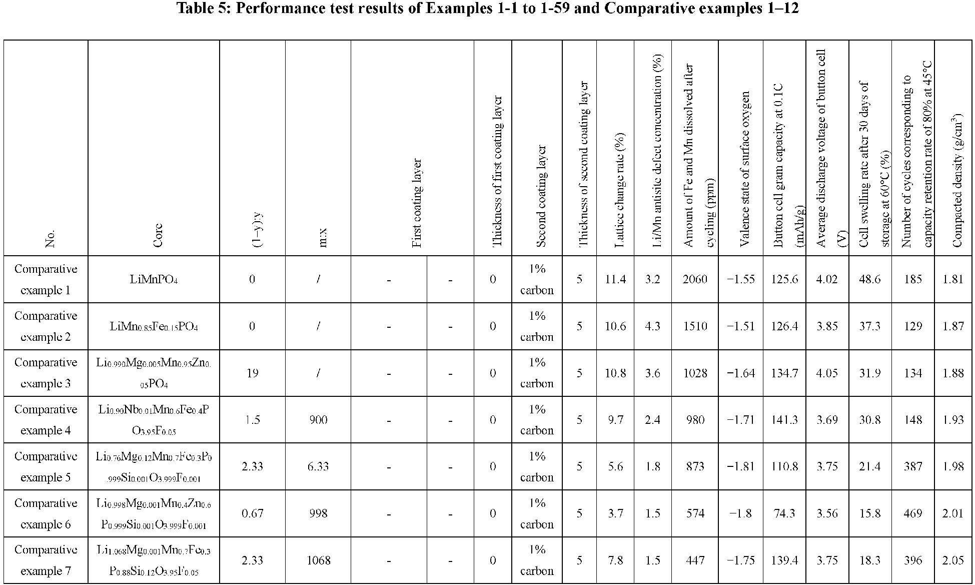

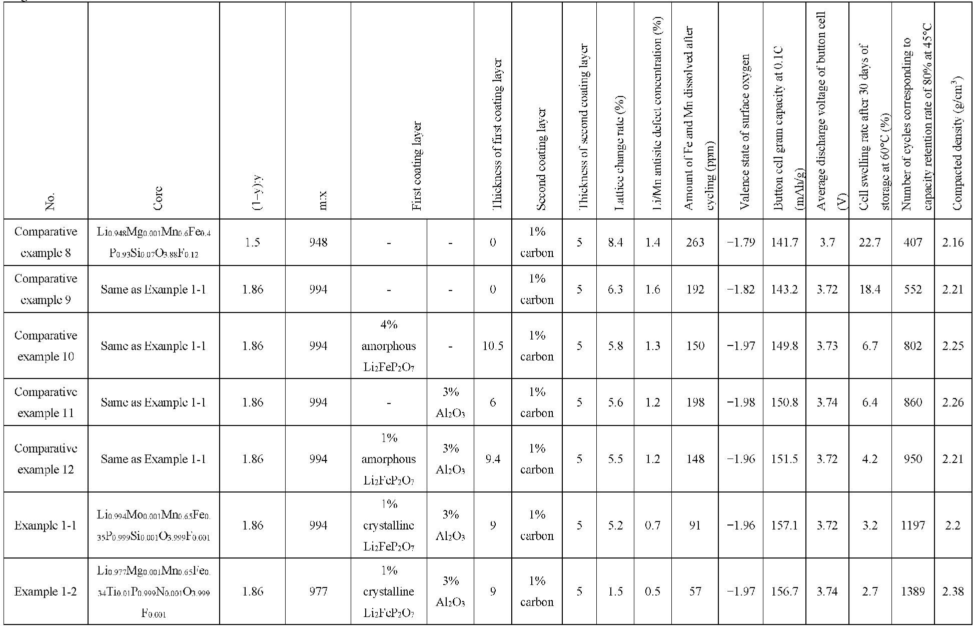

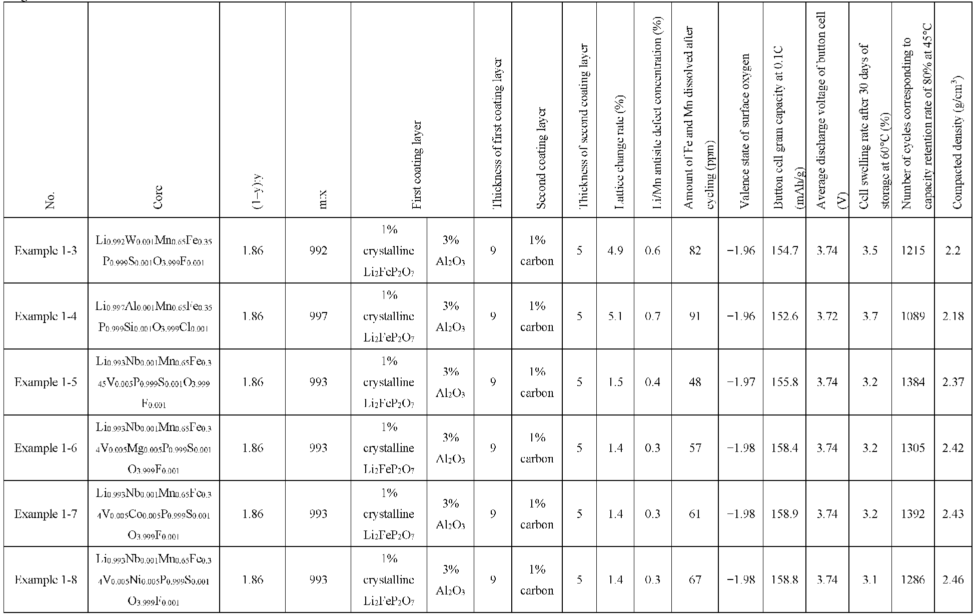

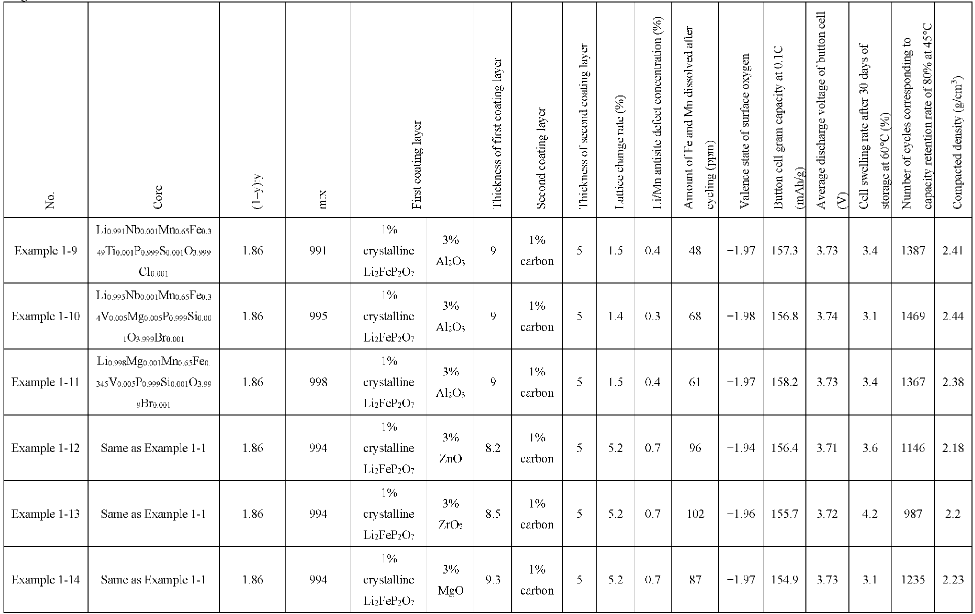

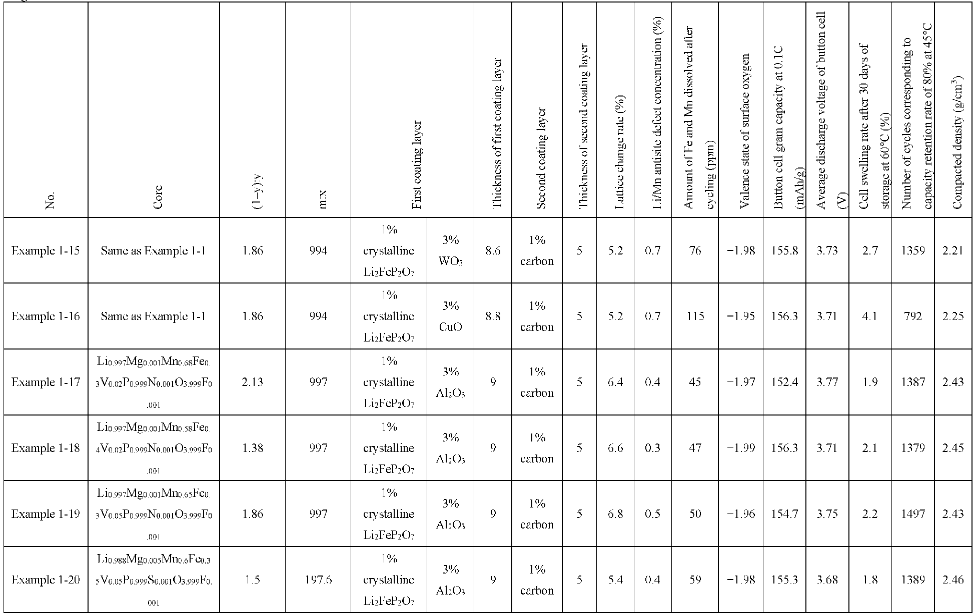

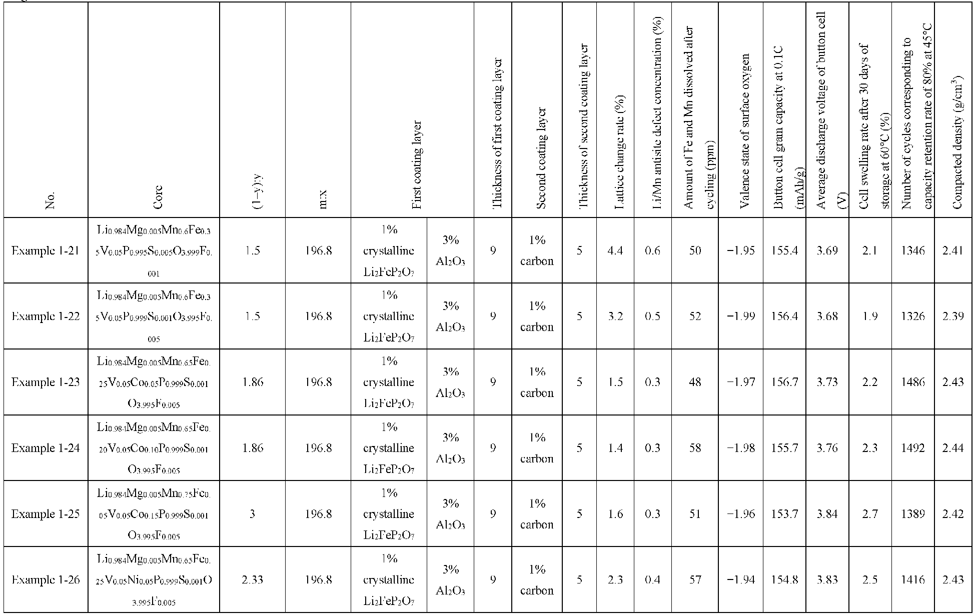

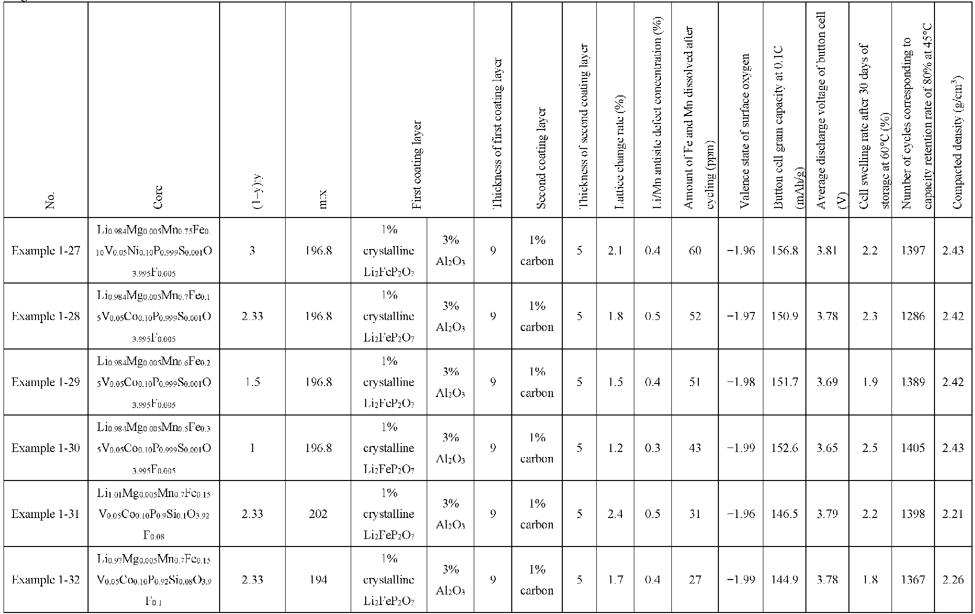

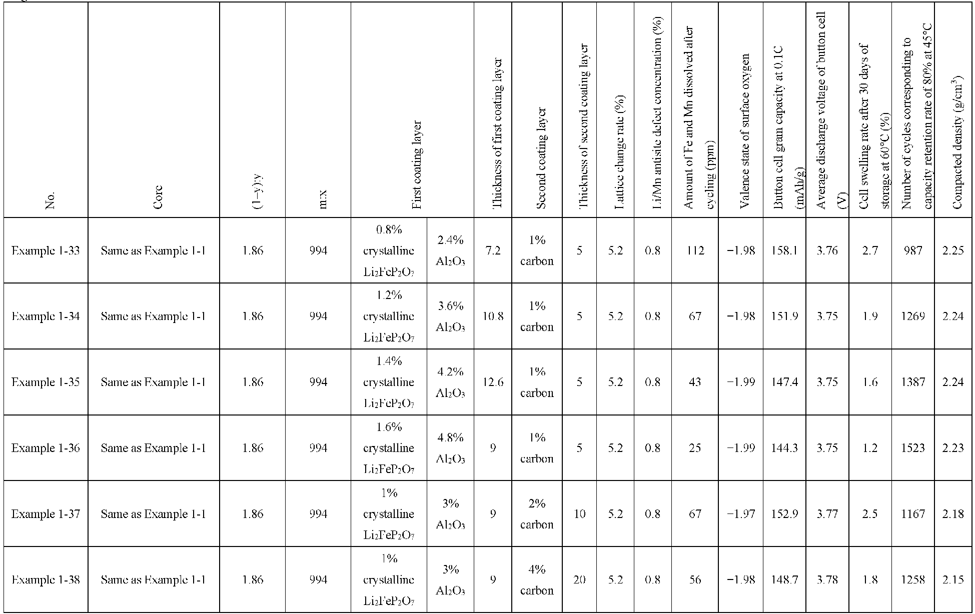

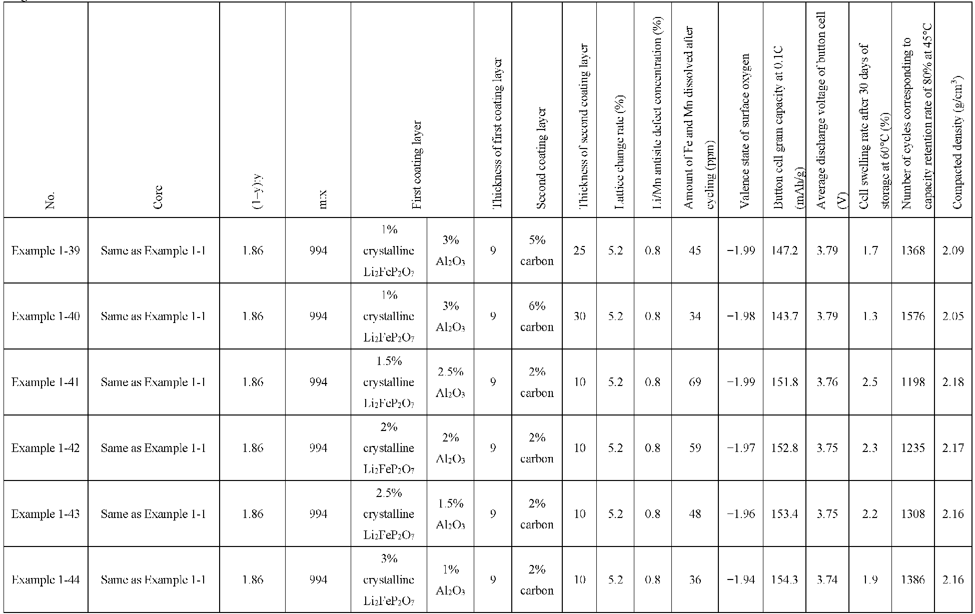

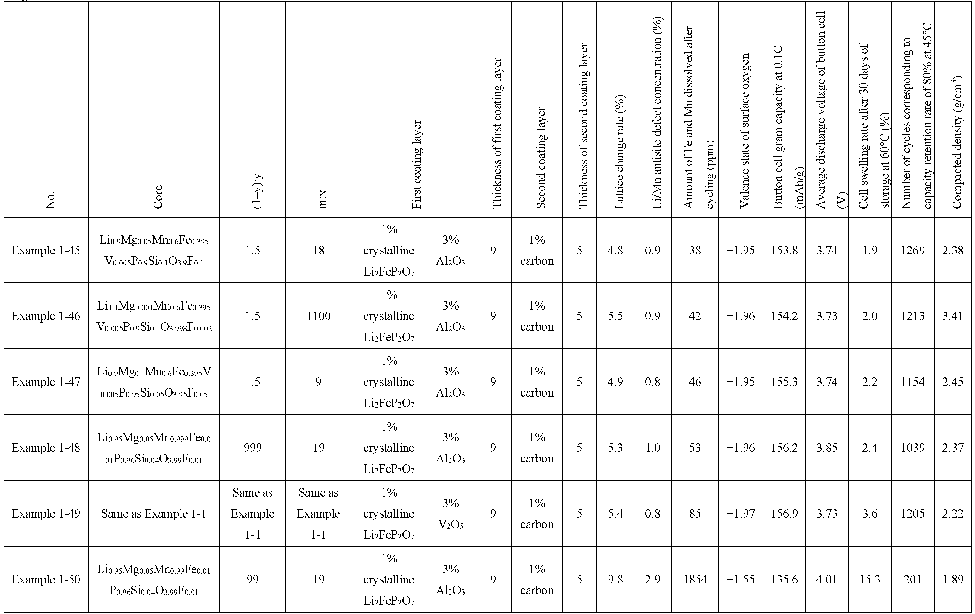

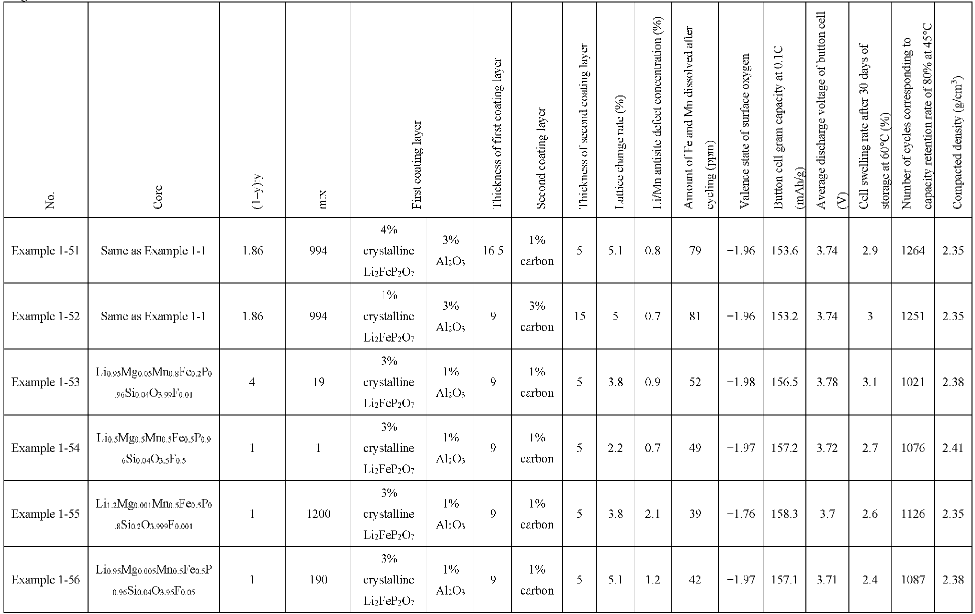

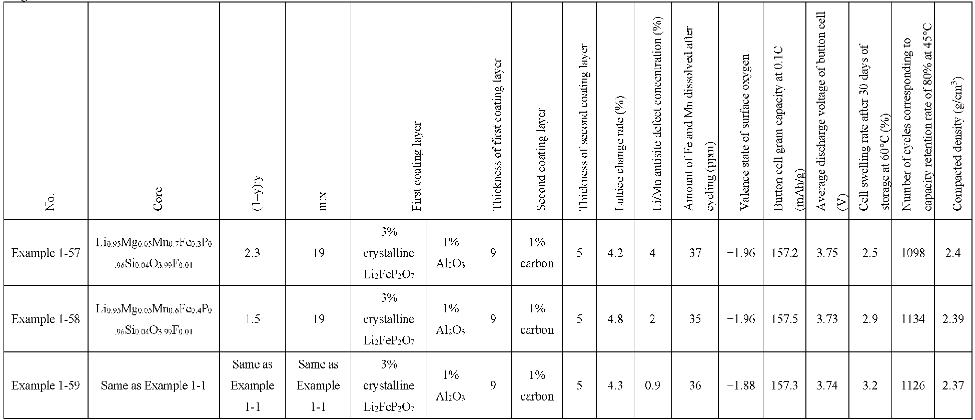

It can be learned from Examples 1-1 to 1-59 and Comparative examples 1 to 9 that the presence of the first coating layer is conducive to reducing the Li/Mn antisite defect concentration and amount of Fe and Mn dissolved after cycling in the resulting material, increasing the button cell gram capacity of the battery, and improving the high-temperature storage performance, safety performance, and cycling performance of the battery. When other elements are doped at the Li, Mn, phosphorus, and oxygen sites, respectively, the lattice change rate, antisite defect concentration, and amount of Fe and Mn dissolved in the resulting material can be significantly reduced, the gram capacity and compacted density of the battery can be increased, and the high-temperature storage performance, safety performance, and cycling performance of the battery can be improved.

It can be learned from Example 1-33 to 1-36 that as the amount of the first coating layer increases from 3.2% to 6.4%, in the resulting material, the amount of Fe and Mn dissolved after cycling is gradually decreased, and the high-temperature storage performance, safety performance, and 45°C cycling performance of the corresponding battery are improved, but the button cell gram capacity is slightly decreased. Optionally, the corresponding battery has the best overall performance when the total amount of the first coating layer is 4-6.4% by weight.

It can be learned from Example 1-1 and Examples 1-37 to 1-40 that as the amount of the second coating layer increases from 1% to 6%, in the resulting material, the amount of Fe and Mn dissolved after cycling is gradually decreased, and the high-temperature storage performance, safety performance, and 45°C cycling performance of the corresponding battery are improved, but the button cell gram capacity is slightly decreased. Optionally, the corresponding battery has the best overall performance when the total amount of the second coating layer is 3-5% by weight.

It can be learned from Example 1-1 and Examples 1-41 to 1-44 that when both Li₂FeP₂O₇ and Al₂O₃ are present in the first coating layer, in particular Li₂FeP₂O₇ and Al₂O₃ at a weight ratio of 1:3 to 3:1, the improvement in battery performance is significant.

**Table 6: Performance test results of Example 1-1 and Examples 2-1 to 2-4**

| Example No. | Core | First coating layer | | Crystallinity of pyrophosphat e | Lattice change rate (%) | Li/Mn antisite defect concentration (%) | Amount of Fe and Mn dissolved after cycling (ppm) | Valence state of surface oxygen | Button cell gram capacity at 0.1C (mAh/g) | Average discharge voltage of button cell (V) | Cell swelling rate after 30 days of storage at 60°C (%) | Number of cycles corresponding to capacity retention rate of 80% at 45°C | Compacted density (g/cm³) |
|---|---|---|---|---|---|---|---|---|---|---|---|---|---|
| Example 1-1 | Li_{0.994}Mo_{0.001} Mn_{0.65}Fe_{0.3 5}P_{0.999}Si_{0.001} O₃.₉₉₉F₀.₀₀₁ | 1% crystalline Li₂FeP₂O₇ | 3% Al₂O₃ | 100% | 5.2 | 0.7 | 91 | -1.96 | 157.1 | 3.74 | 3.2 | 1197 | 2.2 |
| Example 2-1 | Same as Example 1-1 | Same as Example 1-1 | Same as Example 1-1 | 30% | 5.3 | 1 | 143 | -1.95 | 151.8 | 3.73 | 6.1 | 879 | 2.2 |
| Example 2-2 | Same as Example 1-1 | Same as Example 1-1 | Same as Example 1-1 | 50% | 5.3 | 0.9 | 121 | -1.96 | 153.9 | 3.74 | 4.5 | 986 | 2.23 |
| Example 2-3 | Same as Example 1-1 | Same as Example 1-1 | Same as Example 1-1 | 70% | 5.3 | 0.8 | 102 | -1.97 | 154.6 | 3.75 | 3.3 | 1078 | 2.26 |
| Example 2-4 | Same as Example 1-1 | Same as Example 1-1 | Same as Example 1-1 | 10% | 5.3 | 0.9 | 184 | -1.96 | 148.9 | 3.69 | 6.7 | 696 | 2.18 |

It can be seen from Table 6 that as the crystallinity of pyrophosphate in the first coating layer gradually increases, in the corresponding material, the lattice change rate, Li/Mn antisite defect concentration, and amount of Fe and Mn dissolved are gradually decreased, and in the battery, the button cell capacity is gradually increased and the safety performance and cycling performance are gradually improved.

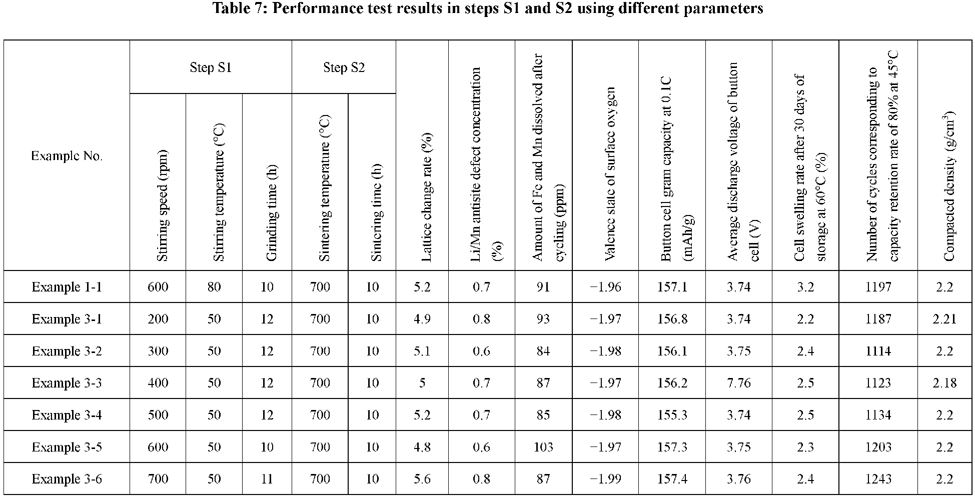

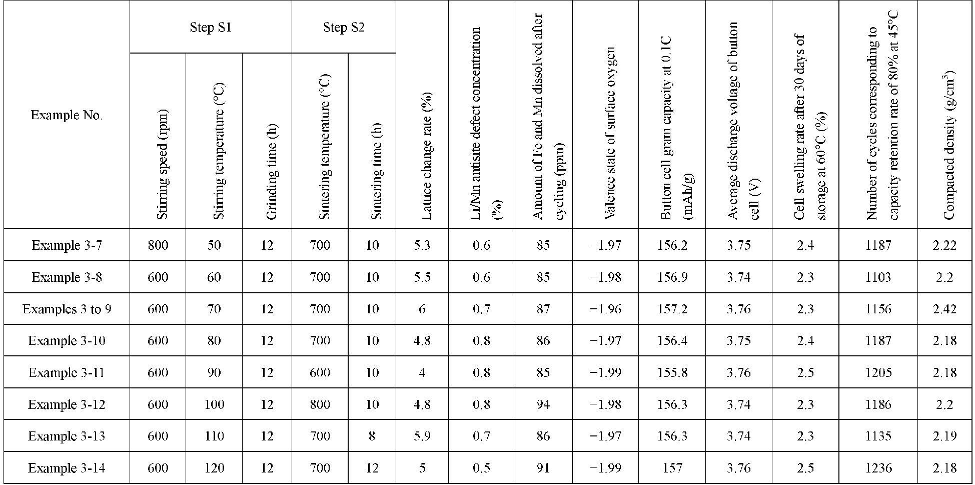

It can be seen from Table 7 that adjustment of the stirring speed, reaction temperature, grinding time, and sintering time in the reactor during the preparation of core can further improve the various performance of the positive electrode material in this application.

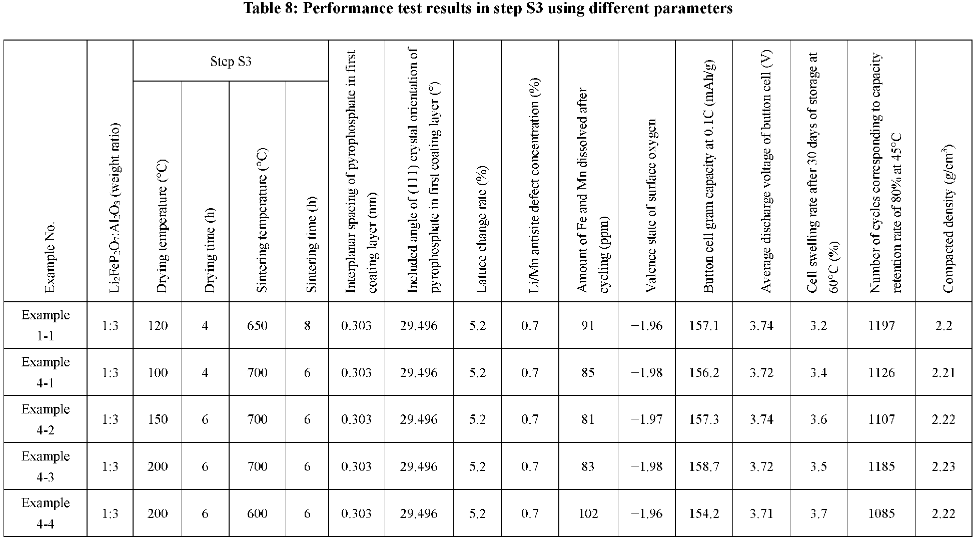

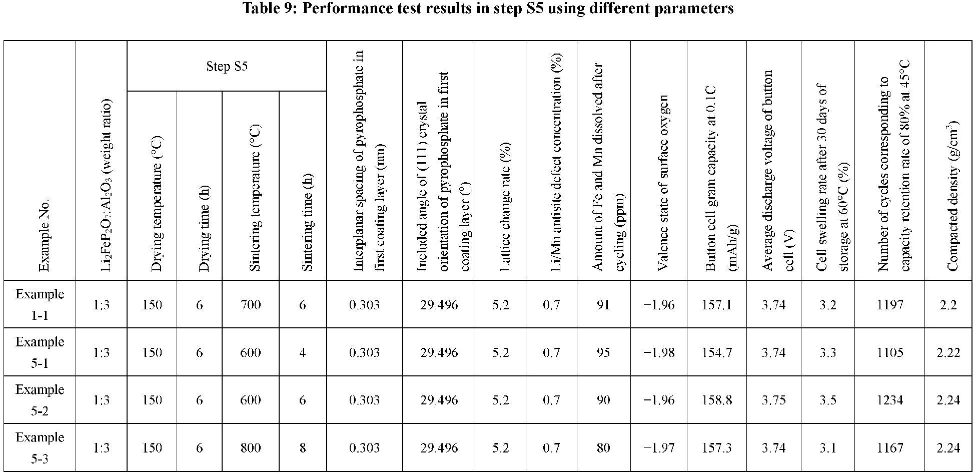

It can be seen from Tables 8 and 9 that during the preparation of lithium iron pyrophosphate by the method in this application, adjustment of the drying temperature/time and sintering temperature/time during the preparation can improve the performance of the resulting material, thereby improving the battery performance; and during the coating, adjustment of the drying temperature/time and sintering temperature/time can improve the performance of the resulting material, thereby improving the battery performance.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A positive electrode active material with a core-shell structure, comprising a core and a shell enveloping the core, wherein
the core comprises LiₘAₓMn_{1-y}B_{y}P_{1-z}C_{z}O₄₋ₙDₙ, wherein m is any value selected in the range from 0.5 to 1.2, optionally any value selected in the range from 0.9 to 1.1; x is any value selected in the range from 0.001 to 0.5, optionally any value selected in the range from 0.001 to 0.1; y is any value selected in the range from 0.001 to 0.5; z is any value selected in the range from 0.001 to 0.2, optionally any value selected in the range from 0.001 to 0.1; n is any value selected in the range from 0.001 to 0.5, optionally any value selected in the range from 0.001 to 0.1; A is one or more elements selected from of Zn, Al, Na, K, Mg, Nb, Mo, and W, optionally one or more elements selected from Al, Mg, Nb, Mo, and W; B is one or more elements selected from Ti, V, Zr, Fe, Ni, Mg, Co, Ga, Sn, Sb, Nb, and Ge, optionally one or more elements selected from Ti, V, Fe, Ni, Mg, and Co; C is one or more elements selected from B, S, Si, and N, optionally one or more elements selected from S, Si, and N; and D is one or more elements selected from S, F, Cl, and Br, optionally one or more elements selected from F, Cl, and Br; and
the shell comprises a first coating layer covering the core and a second coating layer covering the first coating layer;
wherein the first coating layer comprises a crystalline pyrophosphate MₐP₂O₇ and an oxide M'_{b}O_{c}, wherein a is greater than 0 and less than or equal to 4, optionally greater than 0 and less than or equal to 3; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li and Fe; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, more optionally one or more elements selected from Mg, Al, V, Cu, Zn, Zr, and W; and
the second coating layer comprises carbon.

2. The positive electrode active material according to claim 1, wherein in the core,
a ratio of 1-y to y is 1 to 4, optionally 1.5 to 3; and/or,
a ratio of m to x is 1 to 1200, optionally 9 to 1100, more optionally 190 to 998.

3. The positive electrode active material according to claim 1 or 2, wherein
x is any value in the range from 0.001 to 0.005; and/or,
y is any value in the range from 0.01 to 0.5, optionally any value in the range from 0.25 to 0.5; and/or,
z is any value in the range from 0.001 to 0.005; and/or,
n is any value in the range from 0.001 to 0.005.

4. The positive electrode active material according to any one of claims 1 to 3, wherein
a coating amount of the first coating layer is greater than 0% by weight and less than or equal to 7% by weight, optionally 4-5.6% by weight based on a weight of the core.

5. The positive electrode active material according to any one of claims 1 to 4, wherein
a weight ratio of the pyrophosphate to the oxide in the first coating layer is 1:3 to 3:1, optionally 1:3 to 1:1.

6. The positive electrode active material according to any one of claims 1 to 5, wherein
the pyrophosphate in the first coating layer has an interplanar spacing of 0.293-0.326 nm and an included angle of 26.41°-32.57° for a (111) crystal orientation;
optionally, the interplanar spacing of the pyrophosphate in the first coating layer is 0.300-0.310 nm; and/or
optionally, the included angle of the (111) crystal orientation of the pyrophosphate in the first coating layer is 29.00°-30.00°.

7. The positive electrode active material according to any one of claims 1 to 6, wherein
a crystallinity of the pyrophosphate in the first coating layer is 10% to 100%, optionally 50% to 100%.

8. The positive electrode active material according to any one of claims 1 to 7, wherein
a coating amount of the second coating layer is greater than 0% by weight and less than or equal to 6% by weight, optionally 3-5% by weight based on the weight of the core.

9. The positive electrode active material according to any one of claims 1 to 8, wherein
A is any element selected from Zn, Al, Na, K, Mg, Nb, Mo, and W, and optionally, A is Mg or Nb; and/or
B is at least two elements selected from Ti, V, Zr, Fe, Ni, Mg, Co, Ga, Sn, Sb, Nb, and Ge, optionally, B is at least two elements selected from Fe, Ti, V, Co, and Mg, and more optionally, B is a combination of element Fe and at least one element selected from Ti, V, Co, and Mg; and/or
C is any element selected from B, S, Si, and N, and optionally, C is S; and/or
D is any element selected from S, F, Cl, and Br, and optionally, D is F.

10. The positive electrode active material according to any one of claims 1 to 9, wherein
the positive electrode active material has a Li/Mn antisite defect concentration of 4% or less, optionally 2% or less.

11. The positive electrode active material according to any one of claims 1 to 10, wherein
a lattice change rate of the positive electrode active material before and after complete lithium deintercalation and intercalation is 9.8% or less, optionally 6% or less, and more optionally 4% or less.

12. The positive electrode active material according to any one of claims 1 to 11, wherein
a valence state of surface oxygen of the positive electrode active material is -1.55 or less, optionally -1.88 or less, and more optionally -1.98 to -1.88.

13. The positive electrode active material according to any one of claims 1 to 12, wherein
a compacted density of the positive electrode active material under 3 tons is 1.89 g/cm³ or more, optionally 2.0 g/cm³ or more, and more optionally 2.2 g/cm³ or more.

14. A preparation method of positive electrode active material, comprising the following steps:
a step of providing a core material: the core comprising LiₘAₓMn_{1-y}B_{y}P_{1-z}C_{z}O₄₋ₙDₙ, wherein m is any value selected in the range from 0.5 to 1.2, optionally any value selected in the range from 0.9 to 1.1; x is any value selected in the range from 0.001 to 0.5, optionally any value selected in the range from 0.001 to 0.1; y is any value selected in the range from 0.001 to 0.5; z is any value selected in the range from 0.001 to 0.2, optionally any value selected in the range from 0.001 to 0.1; n is any value selected in the range from 0.001 to 0.5, optionally any value selected in the range from 0.001 to 0.1; A is one or more elements selected from of Zn, Al, Na, K, Mg, Nb, Mo, and W, optionally one or more elements selected from Al, Mg, Nb, Mo, and W; B is one or more elements selected from Ti, V, Zr, Fe, Ni, Mg, Co, Ga, Sn, Sb, Nb, and Ge, optionally one or more elements selected from Ti, V, Fe, Ni, Mg, and Co; C is one or more elements selected from B, S, Si, and N, optionally one or more elements selected from S, Si, and N; and D is one or more elements selected from S, F, Cl, and Br, optionally one or more elements selected from F, Cl, and Br; and
a coating step: providing powder comprising pyrophosphate MₐP₂O₇ and a suspension comprising a carbon source and an oxide M'_{b}O_{c}, and mixing the core material, the powder comprising pyrophosphate MₐP₂O₇, and the suspension comprising the carbon source and the oxide M'_{b}O_{c}, followed by sintering, to obtain a positive electrode active material, wherein a is greater than 0 and less than or equal to 4, optionally greater than 0 and less than or equal to 3; b is greater than 0 and less than or equal to 2; c is greater than 0 and less than or equal to 5; M is one or more elements selected from Li, Fe, Ni, Mg, Co, Cu, Zn, Ti, Ag, Zr, Nb, and Al, optionally one or more elements selected from Li and Fe; and M' is one or more elements selected from alkali metals, alkaline earth metals, transition metals, group IIIA elements, group IVA elements, lanthanides, and Sb, optionally one or more elements selected from Li, Be, B, Na, Mg, Al, Si, P, K, Ca, Sc, Ti, V, Cr, Mn, Fe, Co, Ni, Cu, Zn, Ga, Ge, As, Se, Sr, Y, Zr, Nb, Mo, Tc, Ru, Rh, Pd, Ag, Cd, In, Sn, Sb, Te, W, La, and Ce, more optionally one or more elements selected from Mg, Al, V, Cu, Zn, Zr, and W;
wherein the positive electrode active material has a core-shell structure, comprising a core and a shell enveloping the core, the core comprising LiₘAₓMn_{1-y}B_{y}P_{1-z}C_{z}O₄₋ₙDₙ, and the shell comprising a first coating layer covering the core and a second coating layer covering the first coating layer; wherein the first coating layer comprises a crystalline pyrophosphate MₐP₂O₇ and an oxide M'_{b}O_{c}, and the second coating layer comprises carbon.

15. The preparation method according to claim 14, wherein the step of providing a core material comprises the following steps:
step (1): mixing a manganese source, a source of element B, an acid, and an optional solvent to obtain a mixture; and
step (2): mixing the mixture with a lithium source, a phosphorus source, a source of element A, a source of element C, a source of element D, and an optional solvent, followed by drying and sintering, to obtain a core material comprising LiₘAₓMn_{1-y}B_{y}P_{1-z}C_{z}O₄₋ₙDₙ;
optionally, the mixing in the step (1) is carried out at 60°C-120°C; and/or, in the step (1), the mixing is carried out by stirring at 200-800 rpm;
optionally, in the step (2), the mixing is carried out for 8-15 hours; and
optionally, in the step (2), the sintering is carried out at 600°C-900°C for 6-14 hours.

16. The preparation method according to claim 14 or 15, wherein the source of element A is one or more selected from elementary substance, oxides, phosphates, oxalates, carbonates, and sulfates of element A; and/or,
the source of element B is one or more selected from elementary substance, oxides, phosphates, oxalates, carbonates, and sulfates of element B; and/or,
the source of element C is one or more selected from sulfates, borates, nitrates, and silicates of element C; and/or,
the source of element D is one or more selected from elementary substance and ammonium salts of element D.

17. The preparation method according to any one of claims 14 to 16, wherein
the powder comprising pyrophosphate MₐP₂O₇ is prepared by the following steps:
mixing a source of element M, a phosphorus source, and an optional solvent to obtain a mixture, adjusting the pH of the mixture to 4-6, continuing the mixing, and then carrying out drying and sintering; wherein
optionally, the drying is carried out at 100°C-300°C for 4-8 h, optionally at 150°C-200°C; and/or the sintering is carried out at 500°C-800°C under protection of an inert gas for 4-10 h, optionally at 650°C-800°C.

18. The preparation method according to any one of claims 14 to 17, wherein
in the coating step, the sintering temperature is 500°C-800°C and the sintering time is 4-10 h.

19. A positive electrode plate comprising a positive electrode current collector and a positive electrode film layer disposed on at least one surface of the positive electrode current collector, wherein the positive electrode film layer comprises the positive electrode active material according to any one of claims 1 to 13 or a positive electrode active material prepared by the preparation method according to any one of claims 14 to 18, and a percentage of the positive electrode active material in the positive electrode film layer is 10% or more by weight based on a total weight of the positive electrode film layer; and
optionally, the percentage of the positive electrode active material in the positive electrode film layer is 90-99.5% by weight based on the total weight of the positive electrode film layer.

20. A secondary battery, comprising the positive electrode active material according to any one of claims 1 to 13 or a positive electrode active material prepared by the preparation method according to any one of claims 14 to 18 or the positive electrode plate according to claim 19.

21. A battery module, **characterized by** comprising the secondary battery according to claim 20.

22. A battery pack, **characterized by** comprising the battery module according to claim 21.

23. An electric apparatus, **characterized by** comprising at least one selected from the secondary battery according to claim 20, the battery module according to claim 21, and the battery pack according to claim 22.
